# EUROPEAN PATENT APPLICATION

(11) **EP 4 509 869 A1**
(43) Date of publication of application: **19.02.2025**
(21) Application number: 22937203.2
(22) Date of filing: 31.10.2022
(51) Int. Cl.: G01S 7/481

(54) **LIDAR AND DETECTION METHOD THEREOF, AND READABLE STORAGE MEDIUM**

(30) Priority: 14.04.2022 CN 202210389119; 14.04.2022 CN 202210390050
(71) Applicant: Hesai Technology Co., Ltd., Shanghai, 201815 (CN)
(72) Inventor: SHI, Congbo, Shanghai 201815 (CN); DING, Chunbo, Shanghai 201815 (CN); LU, Xiaoming, Shanghai 201815 (CN); XIANG, Shaoqing, Shanghai 201815 (CN)
(74) Representative: Fish & Richardson P.C.
(86) International application number: PCT/CN2022/128765
(87) International publication number: WO 2023/197570

(57) **Abstract**

A LiDAR, a detection method thereof, and a readable storage medium are disclosed. The LiDAR includes multiple lasers and multiple detectors to form multiple channels, and the detection method includes: performing detection by group for all channels, where the detection includes: emitting, by a laser, an optical signal, receiving, by a detector, an echo signal reflected by an obstacle, and determining detection information on the obstacle based on the echo signal; emitting, by each group of lasers, light in parallel; a single detection of each channel including a first sub-detection and a second sub-detection; and correspondingly changing a light-emitting strategy of a laser of a parallel light-emitting channel in at least one of the second sub-detection or a first sub-detection of a subsequent round based on an echo signal in the first sub-detection. Solutions of embodiments of this disclosure can reduce crosstalk between parallel light-emitting channels and improve detection quality.

## Description

### TECHNICAL FIELD

Embodiments of this disclosure relate to the field of LiDAR technologies and, in particular, to a LiDAR ("Light Detection And Ranging") and a detection method thereof, and a readable storage medium.

### BACKGROUND

With increase of channels (e.g., line) of a LiDAR, to improve resolution or frequency of point cloud, the number of parallel light-emitting channels may be increased. When lasers of multiple channels of the LiDAR emit light in parallel, a detector of each channel can receive reflected light from obstacles of other channels, and the closer the LiDAR is to a target object, the higher the reflectivity of the target object, and the higher the intensity of the reflected light. When the intensity reaches a certain level, crosstalk can be generated on the detector.

A solution to solve a crosstalk problem between multiple channels working in parallel is a code of a laser pulse. For example, when dual pulses are emitted, the multiple channels working in parallel use different pulse intervals, and it determines whether an echo signal is an echo of this channel by decoding the echo signal.

However, when there is a high-reflectivity object (which can be called a high-reflection object) in a field of view, the echo signal is very strong, and other channels working in parallel can receive serious interference signals (echoes from other parallel channels), making the echo signal unable to be effectively decoded, and an interference signal can be misjudged as the echo of this channel, to cause point cloud information to be generated for a position or an angle where no object originally exists, resulting in "ghost".

Moreover, existence of the high-reflectivity object in the field of view is a common situation in an unmanned scenario. For example, a road sign is a typical high-reflectivity object, and the road sign is a target recognition object that the LiDAR often encounters when it is applied to autonomous driving. Therefore, the crosstalk problem between channels of the LiDAR is urgently to be solved.

Content of the background merely discloses technologies known by applicants, and does not necessarily represent the existing technologies in this field.

### SUMMARY

In view of this, one aspect of embodiments of this disclosure provides a LiDAR and a detection method thereof, and a readable storage medium, which can reduce crosstalk between channels that emit light in parallel caused by a high-reflectivity object and improve detection quality.

In view of this, a LiDAR and a detection method thereof, and a readable storage medium are provided in another aspect of embodiments of this disclosure, which can reduce crosstalk between parallel light-emitting channels and improve the detection quality.

Firstly, embodiments of this disclosure provide a detection method for a LiDAR, where the LiDAR includes multiple lasers and multiple detectors to form multiple channels, and the detection method includes:
performing detection by group based on a predetermined detection time sequence for all channels in a single detection round, where the detection is performed in parallel for each group of channels, and a single detection of each channel includes a first sub-detection and a second sub-detection, and for multiple parallel detecting channels:
controlling lasers corresponding to the multiple parallel detecting channels to emit light using a first light intensity in the first sub-detection, and determining first detection data through the detection by detectors corresponding to the multiple parallel detecting channels, where the first light intensity is configured to enable the corresponding detectors to merely receive echoes from high-reflectivity objects with reflectivity greater than a predetermined first reflectivity threshold;
changing a light-emitting strategy of the lasers of the multiple channels based on the first detection data in the second sub-detection, and determining second detection data through the detection by the detectors corresponding to the multiple parallel detecting channels; and
determining a detecting result of the multiple channels for a single detection based on at least one of the first detection data or the second detection data.

Optionally, changing the light-emitting strategy of the lasers of the multiple channels based on the first detecting result in the second sub-detection includes:
determining whether a high-reflectivity object with the reflectivity greater than the first reflectivity threshold exists within a detection range of the multiple channels based on the first detection data in the second sub-detection;
controlling, for a channel with no high-reflectivity object within the detection range, a laser corresponding to the channel to emit the light using a second light intensity, where the second light intensity is greater than the first light intensity; and controlling, for a channel with the high-reflectivity object within the detection range, light intensity of a laser corresponding to the channel to be less than the second light intensity.

Optionally, determining whether the high-reflectivity object with the reflectivity greater than the first reflectivity threshold exists within the detection range of the multiple channels based on the first detection data in the second sub-detection includes:
collecting a characteristic value of the first detection data; and
determining whether the characteristic value of the first detection data exceeds a predetermined first detection threshold to determine whether the high-reflectivity object with the reflectivity greater than the predetermined first reflectivity exists within the detection range of the multiple channels.

Optionally, controlling, for the channel with the high-reflectivity object within the detection range, the light intensity of the laser corresponding to the channel to be less than the second light intensity includes at least one of:
controlling, for the channel with the high-reflectivity object within the detection range, the laser corresponding to the channel not to emit the light; or
controlling, for the channel with the high-reflectivity object within the detection range, the light intensity of the laser corresponding to the channel to be a third light intensity, where the third light intensity is smaller than the second light intensity.

Optionally, the third light intensity does not exceed the first light intensity.

Optionally, determining the detecting result of the multiple channels for the single detection based on the at least one of the first detection data or the second detection data includes:
determining the detecting result of the multiple channels for the single detection based on the first detection data, in controlling, for the channel with the high-reflectivity object within the detection range, the laser corresponding to the channel not to emit the light; and
determining the detecting result of the multiple channels for the single detection based on the second detection data or based on the first detection data and the second detection data, in controlling, for the channel with the high-reflectivity object within the detection range, the light intensity of the laser corresponding to the channel to be the third light intensity.

Optionally, determining the detecting result of the multiple channels for the single detection based on the first detection data and the second detection data includes:
superposing an echo signal in the first sub-detection and an echo signal in the second sub-detection as detection data of respective corresponding channels; and
determining a detecting result of the respective corresponding channels for the single detection based on the detection data of the respective corresponding channels.

Optionally, controlling, for the channel with no high-reflectivity object within the detection range, the laser corresponding to the channel to emit the light using the second light intensity includes:
controlling, for the channel with no high-reflectivity object within the detection range, the laser corresponding to the channel to emit a single laser pulse or a multi-pulse sequence.

Optionally, controlling the laser corresponding to the channel to emit the light using the first light intensity in the first sub-detection further includes:
controlling the lasers of the multiple channels to emit the single laser pulse or the multi-pulse sequence.

Optionally, the single laser pulse or the multi-pulse sequence emitted by lasers of different channels in the multiple channels has different encoding information, and the encoding information includes at least one of the number of pulses, pulse starting emission time, a time interval between multi pulses, a pulse intensity ratio, and a pulse width ratio.

Optionally, the method further includes:
changing the encoding information of the multiple channels in a current detection round based on a detecting result of the multiple parallel detecting channels in a previous detection round.

Optionally, changing the encoding information of the multiple channels in the current detection round based on the detecting result of the multiple parallel detecting channels in the previous detection round includes:
changing the pulse starting emission time of lasers of channels with echoes overlapping in time when the echoes determined by the first sub-detection at a previous horizontal azimuth overlap each other in time for the multiple parallel detecting channels, to cause the pulse starting emission time of the multiple channels with the echoes overlapping in time in the current detection round to be different.

Optionally, performing the detection by group based on the predetermined detection time sequence for all channels in the single detection round includes:
controlling lasers of all channels to emit the light in sequence based on the first sub-detection and the second sub-detection of all channels in the single detection round.

Performing the detection by group based on the predetermined detection time sequence for all channels in the single detection round includes:
controlling lasers of one or more groups of channels to emit the light by group in sequence based on the first sub-detection and the second sub-detection in the single detection round.

Embodiments of this disclosure further provide another detection method for a LiDAR, where the LiDAR includes multiple lasers and multiple detectors to form multiple channels, and the detection method includes:
performing detection by group for all channels;
where the detection includes: emitting, by the laser, an optical signal, receiving, by the detector, an echo signal reflected by an obstacle, and determining detection information on the obstacle based on the echo signal;
emitting, by each group of lasers, light in parallel;
a single detection of each channel including a first sub-detection and a second sub-detection; and
correspondingly changing a light-emitting strategy of a laser of a parallel light-emitting channel in at least one of the second sub-detection or a first sub-detection of a subsequent round based on an echo signal in the first sub-detection.

Optionally, correspondingly changing the light-emitting strategy of the laser of the parallel light-emitting channel in the second sub-detection or the first sub-detection of the subsequent round based on the echo signal in the first sub-detection includes:
correspondingly changing emitted light intensity of the laser of the parallel light-emitting channel in the at least one of the second sub-detection or the first sub-detection of the subsequent round based on strength of the echo signal in the first sub-detection.

Optionally, the emitted light intensity of the laser of the parallel light-emitting channel in the first sub-detection is a first light intensity, and the first light intensity enables the detector to merely detect an echo signal from a high-reflectivity object with the strength greater than a predetermined first threshold.

Optionally, correspondingly changing the emitted light intensity of the laser of the parallel light-emitting channel in the at least one of the second sub-detection or the first sub-detection of the subsequent round based on the strength of the echo signal in the first sub-detection includes:
controlling, for a channel with an echo signal with the strength greater than the first threshold and less than a second threshold, a laser of the channel to emit light using a second light intensity in the at least one of the second sub-detection or the first sub-detection of the subsequent round, where the second light intensity is different from the first light intensity.

Optionally, correspondingly changing the emitted light intensity of the laser of the parallel light-emitting channel in the at least one of the second sub-detection or the first sub-detection of the subsequent round based on the strength of the echo signal in the first sub-detection further includes at least one of
controlling, for a channel with no echo signal with the strength greater than the first threshold within a detection range, a laser of the channel to emit the light using a third light intensity in the at least one of the second sub-detection or the first sub-detection of the subsequent round, where the third light intensity is not less than the second light intensity; or
controlling, for a channel with an echo signal with the strength not less than the second threshold within the detection range, a laser of the channel not to emit the light in the second sub-detection, or the laser of the channel to emit the light using a fourth light intensity in the at least one of the second sub-detection or the subsequent round, where the fourth light intensity is less than the second light intensity and greater than the first light intensity.

Optionally, correspondingly changing the light-emitting strategy of the laser of the parallel light-emitting channel in the at least one of the second sub-detection or the first sub-detection of the subsequent round based on the echo signal in the first sub-detection includes:
correspondingly changing a relative light-emitting time sequence of the laser of the parallel light-emitting channel in the at least one of the second sub-detection or the first sub-detection of the subsequent round based on a strength interval where the echo signal in the first sub-detection is located.

Optionally, the detection method further includes: controlling a laser of each channel to emit a single laser pulse or a multi-pulse sequence in at least one of the first sub-detection or the second sub-detection.

Optionally, correspondingly changing the relative light-emitting time sequence of the laser of the parallel light-emitting channel in the at least one of the second sub-detection or the first sub-detection of the subsequent round based on the strength interval where the echo signal in the first sub-detection is located includes:
changing pulse starting emission time of lasers of channels with echoes overlapping in time when the echoes determined in the first sub-detection of a single detection overlap each other in time, to cause the pulse starting emission time of the channels with the echoes overlapping in time in the at least one of the second sub-detection or the first sub-detection of a subsequent predetermined round to be different.

Optionally, changing the pulse starting emission time of the lasers of the channels with the echoes overlapping in time when the echoes determined in the first sub-detection of the single detection overlap each other in time, to cause the pulse starting emission time of the channels with the echoes overlapping in time in the first sub-detection of the subsequent predetermined round to be different includes:
changing the pulse starting emission time of the lasers of the channels with the echoes overlapping in time when the echoes determined in the first sub-detection of a current detection corresponding to a current horizontal angle overlap each other in time, to cause the pulse starting emission time of the multiple channels with the echoes overlapping in time in a next detection corresponding to a next horizontal angle to be different.

Optionally, the detection method further includes: controlling all channels to perform the first sub-detection in sequence based on a predetermined grouping time sequence, and then the second sub-detection by group.

Optionally, the detection method further includes: controlling channels of a predetermined group to continuously perform the first sub-detection and the second sub-detection in sequence based on the predetermined grouping time sequence.

Optionally, the detection method further includes: determining a detecting result for the single detection based on an echo signal of at least one of the first sub-detection or the second sub-detection.

Correspondingly, embodiments of this disclosure further disclose a LiDAR, including:
a light-emitter module, including multiple lasers;
a light-detector module, including multiple detectors respectively provided corresponding to the multiple lasers to form multiple channels, where the multiple detectors are configured to collect echoes after lasers of corresponding channels emit light to irradiate objects;
a data processor apparatus configured to perform detection by group based on a predetermined detection time sequence for all channels in a single detection round, where the detection is performed in parallel for each group of channels, and a single detection of each channel includes a first sub-detection and a second sub-detection, and for multiple parallel detecting channels: controlling lasers of the multiple parallel detecting channels to emit the light using a first light intensity in the first sub-detection, and determining first detection data through the detection by detectors corresponding to the multiple parallel detecting channels, where the first light intensity is configured to enable the corresponding detectors to receive echoes from high-reflectivity objects with reflectivity greater than a predetermined first reflectivity threshold; changing a light-emitting strategy of the lasers of the multiple channels based on the first detection data in the second sub-detection, and determining second detection data through the detection by the corresponding detectors; and determining a detecting result of the multiple channels for a single detection based on at least one of the first detection data or the second detection data.

Optionally, the data processor apparatus is configured to determine whether a high-reflectivity object with the reflectivity greater than the first reflectivity threshold exists within a detection range of the multiple channels based on the first detection data in the second sub-detection; control, for a channel with no high-reflectivity object within the detection range, a laser corresponding to the channel to emit the light using a second light intensity, where the second light intensity is greater than the first light intensity; and control, for a channel with the high-reflectivity object within the detection range, light intensity of a laser corresponding to the channel to be less than the first light intensity.

Correspondingly, embodiments of this disclosure further provide another LiDAR, including:
multiple lasers and multiple detectors to form multiple channels, where the lasers emit optical signals, the detectors receive echo signals reflected by obstacles, and a laser and a detector in a same channel at least partially overlap in a field of view;
a controller configured to control all channels to perform detection by group, including: controlling lasers of each group to emit light in parallel; a single detection of each channel including a first sub-detection and a second sub-detection; and correspondingly changing a light-emitting strategy of a laser of a parallel light-emitting channel in at least one of the second sub-detection or a first sub-detection of a subsequent round based on an echo signal in the first sub-detection.

Correspondingly, embodiments of this disclosure further provide a computer-readable storage medium with computer instructions stored thereon, where when the computer instructions are executed, steps of the method based on any of the above embodiments are executed.

The LiDAR and the detection method thereof in the embodiments of this disclosure are used. In the single detection round, the detection is performed by group based on the predetermined detection time sequence, the detection is performed in parallel for each group of channels, and the single detection of each channel includes two detection stages, that is, the first sub-detection and the second sub-detection. Among them, for the multiple parallel detecting channels, the lasers corresponding to the multiple parallel detecting channels are controlled to emit the light using the first light intensity in the first sub-detection. Because the first light intensity is configured to enable the detectors corresponding to the multiple parallel detecting channels to merely receive the echoes from the high-reflectivity objects with the reflectivity greater than the predetermined first reflectivity threshold, the high-reflectivity object with the reflectivity greater than the first reflectivity threshold within the detection range can be identified in the first sub-detection. Further, in the second sub-detection, the light-emitting strategy of the lasers of the multiple channels is changed based on the first detection data, and the second detection data is determined through the detection by the detectors. In the final, the detecting result of the multiple channels for the single detection is determined based on the at least one of the first detection data or the second detection data. It can be known from the above detection process that the high-reflectivity object can be identified through the first sub-detection, and then the light-emitting strategy of the lasers of the multiple parallel light-emitting channels can be changed in the second sub-detection, so as to reduce an influence of the echo from the high-reflectivity object on the multiple parallel detecting channels, thereby alleviating a crosstalk problem of the multiple parallel detecting channels caused by the high-reflectivity object and improving detection quality.

In addition, it can be determined whether the high-reflectivity object exists within the detection range of the multiple channels based on the first detection data in the second sub-detection. Further, on one hand, for the channel with no high-reflectivity object within the detection range, the laser corresponding to the channel is controlled to emit the light using the second light intensity, where the second light intensity is greater than the first light intensity; and on the other hand, for the channel with the high-reflectivity object within the detection range, the light intensity of the laser corresponding to the channel is further controlled to be less than the second light intensity. It can be seen from the above light-emitting strategy of the multiple channels in the second sub-detection that for the channel with no high-reflectivity object within the detection range, the laser corresponding to the channel is controlled to emit the light using the second light intensity greater than the first light intensity, to cause that the object within the detection range can be normally detected. However, for the channel with the high-reflectivity object within the detection range, the light intensity of the laser corresponding to the channel is controlled to be less than the second light intensity. Therefore, interference to other channels can be reduced and overall detection quality can be improved while ensuring the detection of the high-reflectivity object within the detection range.

Further, for the channel with the high-reflectivity object within the detection range, the laser corresponding to the channel is controlled not to emit the light or the light intensity of the laser corresponding to the channel is controlled to be the third light intensity smaller than the second light intensity, to cause that interference of the echo from the high-reflectivity object on the parallel detecting channel can be suppressed and the crosstalk between the channels can be avoided.

In addition, although the first light intensity in the first sub-detection is configured to enable the detector to merely receive the echo from the high-reflectivity object with the reflectivity greater than the predetermined first reflectivity threshold within the detection range, if there is a conventional diffuse reflection object in a field of view of any of the channels, an echo signal thereof can also be received by the detector, especially when the diffuse reflection object is relatively close. In view of this, in some embodiments of this disclosure, by superposing the echo signal in the first sub-detection and the echo signal in the second sub-detection as the detection data of respective corresponding channels, the detecting result of the respective corresponding channels for the single detection can be determined based on the detection data of the respective corresponding channels. During this detection process, both the high-reflectivity object and the conventional diffuse reflection object within the detection range (including a position at relatively close distance) can be detected, thereby improving detection capability.

Further, because the single laser pulse or the multi-pulse sequence emitted by the lasers of different channels among the multiple channels has different encoding information, to cause that the crosstalk between the channels and interference of other LiDARs can be further reduced, thereby further improving the detection quality. In addition, by changing the encoding information of the respective channels working in parallel in the current detection round based on the detecting result of the respective channels working in parallel in the previous detection round, the crosstalk between the respective channels working in parallel can be avoided by changing the encoding information of the respective channels working in parallel, thereby further improving the detection quality.

Further, when the echoes determined by the first sub-detection at the previous horizontal azimuth overlap each other in time for the multiple parallel detecting channels, it is noted that the crosstalk can occur between these channels, and then the pulse starting emission time of the lasers of the channels with the echoes overlapping in time is changed, to cause the pulse starting emission time of the channels with the echoes overlapping in time in the current detection round to be different, and thus the echoes of these channels are no longer overlapped in time, that is, the encoding information in the current detection round is changed through the detection data in the first sub-detection at the previous horizontal azimuth, thereby avoiding the crosstalk between the channels.

Further, in one detection round, the lasers of one or more groups of channels are controlled to emit the light by group in sequence based on the first sub-detection and the second sub-detection, to cause that angular deviation between field of views corresponding to two detections, that is, the first sub-detection and the second sub-detection, of a same channel can be reduced, thereby further improving detection accuracy.

The LiDAR and the detection method thereof in the embodiments of this disclosure are used. When the LiDAR is used for the detection, the detection is performed for all channels by group, where the single detection of each channel includes the first sub-detection and the second sub-detection, and the light-emitting strategy of the laser of the parallel light-emitting channel in the at least one of the second sub-detection or the first sub-detection of the subsequent round can be correspondingly changed based on the echo signal in the first sub-detection. Because the echo signals in the first sub-detection of respective parallel light-emitting channels can reflect features of the obstacles within the detection range of the respective channels and the possible crosstalk between respective parallel channels, for each channel, after the light-emitting strategy of the laser of the parallel light-emitting channel in the at least one of the second sub-detection or the first sub-detection of the subsequent round is changed based on the echo signal in the first sub-detection corresponding to the channel, and the crosstalk between the echo signals of the multiple parallel light-emitting channels can be reduced during the at least one of the second sub-detection or the first sub-detection of the subsequent round, to cause that the features of the obstacles within the detection range of the respective channels can be more accurately reflected, thereby reducing the crosstalk between the parallel light-emitting channels as a whole and improving the detection quality.

Further, because the echo signal can reflect the features of the obstacle such as distance and reflectivity, the emitted light intensity of the laser of the parallel light-emitting channel in the at least one of the second sub-detection or the first sub-detection of the subsequent round is correspondingly changed based on the strength of the echo signal in the first sub-detection, to cause the emitted light intensity of the laser of the parallel light-emitting channel in the at least one of the second sub-detection or the first sub-detection of the subsequent round to change, thereby reducing the crosstalk between the parallel light-emitting channels and improving the detection quality.

Further, by controlling the emitted light intensity of the laser of the parallel light-emitting channel in the first sub-detection to be the first light intensity, and the first light intensity enabling the detector to merely detect the echo signal from the high-reflectivity object with the strength greater than the predetermined first threshold, the high-reflectivity object within the detection range can be identified based on the strength of the echo signal received by the detector in the first sub-detection, thereby providing an accuracy basis for changing the light-emitting strategy of a laser of a subsequent parallel light-emitting channel in the at least one of the second sub-detection or the first sub-detection of the subsequent round.

Further, for the channel with the echo signal with the strength greater than the first threshold and less than the second threshold, it can be impossible to determine whether the channel is affected by the parallel light-emitting channel. Therefore, by controlling the laser of the channel to emit the light using the second light intensity different from the first light intensity in the second sub-detection or the first sub-detection of the subsequent round, interference of other parallel light-emitting channels can be reduced and the overall detection quality can be improved.

Further, for the channel with no echo signal with the strength greater than the first threshold within the detection range, the laser corresponding to the channel is controlled to emit the light using the third light intensity greater than the second light intensity in the at least one of the second sub-detection or the first sub-detection of the subsequent round, to cause that the object within the detection range can be normally detected. For the channel with the strength of the echo signal not less than the second threshold within the detection range, the laser corresponding to the channel is controlled not to emit the light in the second sub-detection, or the laser corresponding to the channel is controlled to emit the light using the fourth light intensity in the at least one of the second sub-detection or the subsequent round. Because the fourth light intensity is smaller than the second light intensity and larger than the first light intensity, interference of the echoes from the high-reflectivity objects on the respective parallel light-emitting channels can be suppressed, thereby avoiding the crosstalk between the channels and improving the overall detection quality.

Further, in one single detection, the relative light-emitting time sequence of the laser of the parallel light-emitting channel in the at least one of the second sub-detection or the first sub-detection of the subsequent round is correspondingly changed based on the strength interval where the echo signal in the first sub-detection is located, to cause a hash distribution of a light-emitting time sequence of the laser of the parallel light-emitting channel in the at least one of the second sub-detection or the first sub-detection of the subsequent round to be realized, thereby avoiding an influence of an interfering channel on other parallel light-emitting channels and further improving the detection accuracy.

Further, for the multiple channels working in parallel, when the echoes determined in the first sub-detection of the single detection overlap each other in time, the crosstalk easily occurs between these channels. To avoid this problem, the pulse starting emission time of the lasers of the channels with the echoes overlapping in time is changed, to cause the pulse starting emission time of the channels with the echoes overlapping in time in the at least one of the second sub-detection or the first sub-detection of the subsequent predetermined round to be different, and thus the echoes of these channels do not overlap each other in time, that is, the encoding information in the at least one of the second sub-detection or the first sub-detection of the subsequent predetermined round of is changed based on the detection data in the first sub-detection, thereby avoiding the crosstalk between the channels and improving the overall detection quality.

Further, for the multiple channels working in parallel, when the echoes determined in the first sub-detection of the current detection corresponding to the current horizontal angle overlap each other in time, the crosstalk easily occurs between these channels. Therefore, the pulse starting emission time of light sources of the channels with the echoes overlapping in time is changed, to cause the pulse starting emission time of the multiple channels with the echoes overlapping in time to be different in a next detection corresponding to a next horizontal angle, and thus the echoes of these parallel channels in the next detection do not overlap in time, that is, the encoding information of the pulse in the next detection corresponding to the next horizontal angle is changed through the detection data in the first sub-detection of the current horizontal angle, thereby avoiding the crosstalk between the channels and improving the overall detection quality.

Further, because one detection includes two measurement processes, that is, the first sub-detection and the second sub-detection, and the light-emitting strategy of the laser of the parallel light-emitting channel in the second sub-detection can be correspondingly changed based on the echo signal in the first sub-detection, and thus the crosstalk between the parallel light-emitting channels can be reduced. In this way, it is more accurate to determine the detecting result of the single detection based on the echo signals in the first sub-detection and the second sub-detection.

### BRIEF DESCRIPTION OF THE DRAWINGS

To describe technical solutions of embodiments of this disclosure more clearly, drawings to be used in the embodiments of this disclosure or in the description of the existing technologies can be briefly introduced below, and it is apparent that the drawings described below are merely some of the embodiments of this disclosure, and that other drawings can also be determined based on these drawings for those ordinary skilled in the art without creative labor.
Fig. 1 shows a top view of an internal structure and a basic optical path for a LiDAR.
Fig. 2 shows a planar structural schematic diagram of a light-emitter module.
Fig. 3 shows a flowchart of a detection method for a LiDAR, provided in embodiments of this disclosure.
Fig. 4 shows a schematic diagram of a detection principle for a LiDAR in a specific application scenario, provided in embodiments of this disclosure.
Fig. 5 shows a schematic diagram of a detection time sequence control method, provided in embodiments of this disclosure.
Fig. 6 shows a schematic diagram of a principle of changing pulse starting emission time of multiple channels, provided in embodiments of this disclosure.
Fig. 7 shows a schematic diagram of another principle of changing pulse starting emission time of multiple channels, provided in embodiments of this disclosure.
Fig. 8 shows a structural schematic diagram of a control system for a LiDAR, provided in embodiments of this disclosure.
Fig. 9 shows a structural schematic diagram of a frame for a LiDAR, provided in embodiments of this disclosure.
Fig. 10a shows a planar structural schematic diagram of a light-emitter device.
Fig. 10b shows a diagram of a scanning field of view for a LiDAR.
Fig. 11 shows a schematic diagram of a specific scenario of crosstalk between channels for a LiDAR.
Fig. 12 shows a schematic diagram of a light emission and detection process of a channel corresponding to a LiDAR in a specific application scenario, provided in embodiments of this disclosure.
Fig. 13 shows a schematic diagram of a light emission and detection process of a channel corresponding to a LiDAR in another specific application scenario, provided in embodiments of this disclosure.
Fig. 14 shows a schematic diagram of a principle of changing pulse starting emission time of multiple channels, provided in embodiments of this disclosure.
Fig. 15 shows another schematic diagram of changing pulse starting emission time of multiple channels, provided in embodiments of this disclosure.
Fig. 16 shows a structural schematic diagram of a LiDAR, provided in embodiments of this disclosure.
Fig. 17 shows a schematic diagram of a detection principle for a LiDAR in a specific application scenario, provided in embodiments of this disclosure.
Fig. 18 shows a schematic diagram of a detection principle for a LiDAR in another specific application scenario, provided in embodiments of this disclosure.
Fig. 19a shows a structural schematic diagram of a frame for a LiDAR, provided in embodiments of this disclosure.
Fig. 19b shows a structural schematic diagram of arrangement inside a LiDAR, provided in embodiments of this disclosure.

### DETAILED DESCRIPTION

To make those skilled in the art better understand problems existing in the existing technologies, firstly, a detection principle for a LiDAR is briefly introduced combined with a specific structure of the LiDAR.

As introduced in the background, when there is a high-reflectivity object within a field of view (i.e., a detection range) during detection of the LiDAR, an echo signal is very strong, and other channels working in parallel can receive serious interference signals (echoes of other channels), making the echo signal unable to be effectively decoded, and an interference signal can be misjudged as an echo of this channel, thereby detecting a false object at a position or an angle where no object originally exists, resulting in "ghost".

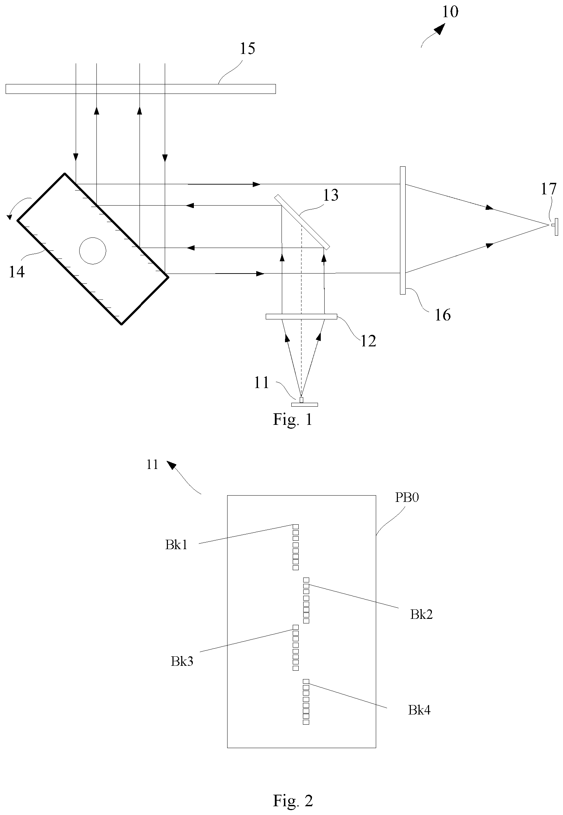

Fig. 1 shows a top view of an internal structure and a basic optical path for a LiDAR. With reference to Fig. 1, in a LiDAR 10, a detection beam emitted by a light-emitter device 11 is shaped by a first lens (assembly) 12, reflected by a reflector 13 to a rotating mirror 14, and a beam reflected by the rotating mirror 14 is transmitted to an external environment through a cover lens 15, and the transmitted beam can be reflected after encountering an obstacle. Among them, some of reflected beams can be transmitted to the rotating mirror 14 through the cover lens 15, and the beam reflected by the rotating mirror 14 can pass through a gap beside the reflecting mirror 13, and is converged by a second lens (assembly) 16 and then detected by a light-detector device 17. Among them, an emitting and receiving optical path is separated by the reflector 13.

It can be understood that a structure of the LiDAR is merely configured to introduce a basic detection principle. In practical application, the reflector 13 can be determined in different forms, and relative position of the light-emitter device 11 and the light-detector device 17 can be changed. For example, the reflector 13 can include an annular reflecting surface. The detection beam passes through a gap between annular reflecting surfaces and irradiates the rotating mirror 14, and then is reflected by the rotating mirror 14 and transmitted to the external environment through the cover lens 15. After being reflected by the rotating mirror 14, the reflected beam is reflected by the annular reflecting surface of the reflector 13 to the second lens (assembly) 16, and then focused on the light-detector device 17.

In specific implementation, the light -emitting device and the light-detector device are usually provided correspondingly and use a similar layout structure. A planar structural layout of the light-emitter device is shown in the following, and light-detector devices at corresponding positions in the LiDAR can use a same layout mode.

Next, Fig. 2 shows a planar structural schematic diagram of a light-emitter device. As a specific example, the light-emitter device 11 includes an emission circuit board PB0 and multiple light-emitting line arrays Bk1 to Bk4 provided on the emission circuit board PB0, where each light-emitting line array includes multiple light-emitter units, for example, each light emitting line array includes eight lasers shown in Fig. 2. Correspondingly, the light-detector device can include light detection lines (e.g., detectors) of multiple light-detector units.

A "line" of a multi-line LiDAR is a scanning line. The number of scanning lines, also known as scanning lines' number, means the number of channels for laser emission and reception, or the minimum number of addressable channels. Typically, the number of lasers and the number of detectors are configured at a ratio of 1:1. An echo determined by reflecting detection light emitted by a laser from an obstacle is received by a detector of the LiDAR to determine a data point corresponding to the obstacle, that is, data of one line. In such a case, the number of scanning lines is equal to the number of lasers or detectors, and also equal to the number of emitting channels or receiving channels. In addition, there is a case where multiple detectors share one laser, or multiple lasers share one detector, or even there can be an overlapping situation. In such a case, the number of scanning lines can be determined by distinguishing the minimum number of addressable gating channels.

Fig. 1 schematically shows a hybrid solid-state LiDAR. Scanning of a certain vertical field of view is realized through arrangement of the light-emitter device and the light-detector device in a vertical direction, and the rotating mirror rotates around a vertical axis to deflect the detection beam to different orientations in a horizontal direction, thereby realizing scanning of a certain range of horizontal field of view. The rotating mirror can also be a scanning mirror such as a vibrating mirror and a swinging mirror. In some embodiments of the LiDAR, the LiDAR is a mechanical rotary LiDAR, and the light-emitter device and the light-detector device are provided on a rotor and rotate with the rotor to realize 360° scanning in the horizontal direction. In other embodiments of the LiDAR, the LiDAR is a solid-state LiDAR, that is, the LiDAR does not contain any mechanical rotary component, and the light-emitter device and the light-detector device are provided in a two-dimensional manner, to cause two-dimensional scanning with a certain horizontal angle and vertical angle to be realized by determining the number and intervals of the light-emitter devices and the light-detector devices.

In the existing technologies, to avoid signal crosstalk, multiple parallel detecting channels typically select long-distance channels. For example, continuously with reference to Fig. 2, at an emitting end, for the light-emitter device 11, first lasers in the light-emitting line arrays Bk1 to Bk4 in a longitudinal direction are selected to emit light in parallel, and different pulse codes are used for multiple parallel light-emitting channels, and it is determined whether an echo signal is an echo of this channel by decoding the echo signal.

However, as introduced in the background, when there is the high-reflectivity object within the field of view during the detection of the LiDAR, the echo signal is very strong, and other channels working in parallel all receive the serious interference signals, making the echo signal unable to be effectively decoded, and the interference signal can be misjudged as the echo of the channel thereof, thereby detecting the false object at the position or an orientation where there is no object originally, resulting in the "ghost".

Moreover, it is a common case encountered that there is the high-reflectivity object within the field of view. For example, a road sign is a typical high-reflectivity object, with a surface composed of many tiny corner reflectors, which can return almost all of light incident to the surface by an original path, and echo energy is extremely strong. Independent encoding between the channels can not effectively solve a crosstalk problem between the channels. However, the road sign is a target recognition object that the LiDAR often encounters when it is applied to autonomous driving. Therefore, the crosstalk problem between the channels of the LiDAR caused by the high-reflectivity object is urgently to be solved.

In view of the above problems, embodiments of this disclosure provide a LiDAR and a detection solution thereof, where a single detection round includes at least two detection stages, that is, a first sub-detection and a second sub-detection. Among them, in the first sub-detection, lasers of multiple parallel detecting channels are controlled to emit the light using a first light intensity, to cause that detectors corresponding to the channels can identify an echo from a high-reflectivity object within a detection range to determine first detection data. Further, in the second sub-detection, a light-emitting strategy of the lasers of the multiple channels is changed based on first detection data in the first sub-detection to determine second detection data. Then a detecting result of the multiple channels for a single detection can be determined based on at least one of the first detection data or the second detection data.

In a single detection round, all channels of the LiDAR complete emission and echo reception of the detection light, that is, all channels of the LiDAR complete one obstacle detection, and each channel determines one data point. The detection light emitted by the LiDAR decays with increase of propagation distance. After being reflected by a surface of the obstacle, some of reflected light can be received by the LiDAR again to form the echo. Therefore, the closer the obstacle is to the LiDAR and the higher the reflectivity of the surface of the obstacle to light, the higher the intensity of the echo that the LiDAR can receive. In the embodiments of this disclosure, the first light intensity can be determined based on maximum detection distance of the LiDAR and the reflectivity of the high-reflectivity object, to cause that the detector merely can receive a reflection echo from the high-reflectivity object at an orientation and within the maximum detection distance corresponding to the channel of the detector. However, the reflection echo from a low-reflectivity object whose reflectivity is not enough to cause the crosstalk between the channels, or a crosstalk echo caused by the reflection echo from the high-reflectivity object on other parallel detecting channels, has a low intensity and thus can be distinguished from the reflection echo from the high-reflectivity object.

In specific implementation, the reflection echo from the high-reflectivity object can be identified in the above three types of echoes based on a first detection threshold, such as at least one of pulse peak intensity, pulse leading edge slope, pulse trailing edge slope, pulse threshold pulse width, and pulse coverage area.

In short, detection solutions in the embodiments of this disclosure are used. Secondary scanning is performed in the single detection round, that is, an azimuth angle of the high-reflectivity object can be identified through the first sub-detection, and then the light-emitting strategy of the lasers of the multiple channels can be changed in the second sub-detection, so as to reduce an influence of the echo from the high-reflectivity object on the multiple channels working in parallel, thereby alleviating the crosstalk problem of the multiple channels working in parallel caused by the high-reflectivity object and improving detection quality.

In embodiments of this disclosure, a LiDAR can include multiple lasers and multiple detectors to form multiple channels. In one detection round, detection is performed by group based on a predetermined detection time sequence for all channels, where the detection is performed in parallel for each group of channels, and a single detection of each channel can include two detection stages, that is, a first sub-detection and a second sub-detection.

Among them, the single detection means a detection process of determining distance or obstacle information of the obstacle at a detection orientation determined for the channel. A group is a concept that channels to be detected at the current orientation are grouped, and a round means the detection of the channels to be detected at a next orientation after the detection for all channels to be detected at the current orientation is completed.

To make those skilled in the art have clearer understanding of technical concept, technical principle, advantages, or the like, contained in the embodiments of this disclosure, detailed description is performed in the following with reference to drawings, through specific embodiments, and combined with specific application scenarios, or the like.

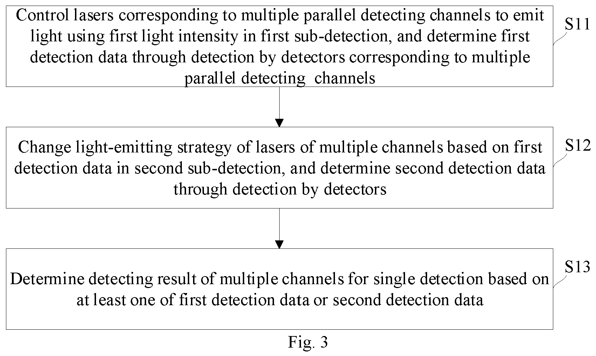

With reference to a flowchart of a detection method for a LiDAR shown in Fig. 3., for the multiple parallel detecting channels, following detection steps can be specifically performed.

At S11, lasers corresponding to the multiple parallel detecting channels are controlled to emit light using a first light intensity in the first sub-detection, and first detection data is determined through the detection by detectors corresponding to the multiple parallel detecting channels.

Among them, the first light intensity is configured to enable the detectors corresponding to the multiple parallel detecting channels to merely receive the echoes from the high-reflectivity objects with reflectivity greater than a predetermined first reflectivity threshold within the detection range.

In practical application of the LiDAR, most obstacles are Lambertian or approximate Lambertian, that is, incident energy is centered at an incident point and energy is isotropically reflected around in a whole hemisphere space, which is also called diffuse reflection. A farthest detection range of the LiDAR is determined based on the reflectivity of Lambertian. For example, an echo reflected by the Lambertian with the reflectivity of 10% at farthest detection distance can be received and responded by the detector, and distance information can be determined. However, for an object with the farther distance or the lower reflectivity, the detector can be not able to respond and detect because the intensity of the echo is decreased. However, the high-reflectivity object such as the road sign, which typically exists in an autonomous driving scenario, has a surface of a corner reflector, with equivalent reflectivity exceeding 10000% calculated based on the Lambertian, and attention must be paid to the crosstalk problem caused by high-intensity echoes generated from the high-reflectivity objects existing at azimuths of certain channels to other channels.

In one specific embodiment, the first reflectivity threshold is determined based on a crosstalk level of the LiDAR.

In specific implementation, the first reflectivity threshold can be slightly higher than the reflectivity corresponding to the crosstalk echo, to cause the first light intensity to be configured to enable the corresponding detector to merely receive the echo from the high-reflectivity object within the detection range but not receive the crosstalk echo. In one specific embodiment, the first detection threshold is Lambertian equivalent reflectivity of 50%.

In specific implementation, in the first sub-detection, the lasers of the multiple channels are controlled to emit a single laser pulse or a multi-pulse sequence.

At S12, the light-emitting strategy of the lasers of the multiple channels is changed based on the first detection data in the second sub-detection, and second detection data is determined through the detection by the detectors.

In one detection round, the detection of each channel includes the first sub-detection and the second sub-detection, respectively. In an optional example, after the first sub-detection and the second sub-detection are completed for the channel in one time sequence, the first sub-detection and the second sub-detection for the channel in a next time sequence are performed. In other optional examples, after the first sub-detection is completed for the channels in multiple time sequences in turn, the second sub-detection is performed for the channels in the multiple time sequences in sequence.

As an optional example, in the second sub-detection, it can be determined whether the high-reflectivity object with the reflectivity greater than the first reflectivity threshold exists within the detection range of the multiple channels based on the first detection data. For a channel with no high-reflectivity object within the detection range, a laser corresponding to the channel can be controlled to emit the light using a second light intensity, and the second light intensity is greater than the first light intensity. For a channel with the high-reflectivity object within the detection range, light intensity of a laser corresponding to the channel is controlled to be less than the second light intensity.

In specific implementation, in the second sub-detection, lasers corresponding to respective channels can be controlled to emit the light using the second light intensity meeting a normal ranging capability of a LiDAR. As one specific example, the farthest detection distance of the LiDAR is 150 m, and the second light intensity can be determined to meet the needs that the detector can receive the echo signal from the object with the reflectivity of 10% at 150 m.

In specific implementation, in the second sub-detection, for a channel that emits the light based on the changed light-emitting strategy, a laser corresponding to the channel can be controlled to emit the single laser pulse or the multi-pulse sequence. As an optional example, for a channel with no high-reflectivity object within the detection range, a laser corresponding to the channel can be controlled to emit the single laser pulse or the multi-pulse sequence.

In specific implementation, the detector can determine the detection data through data sampling for a detected echo signal. For example, the first detection data can include at least one characteristic value, such as the pulse peak intensity, the pulse leading edge slope, the pulse trailing edge slope, the pulse threshold pulse width, the pulse coverage area, or the like of the echo.

In the first sub-detection, the first detection threshold is determined, and it is determined whether the high-reflectivity object exists within the detection range based on whether the characteristic value of the first detection data exceeds the first detection threshold. In specific implementation, the first detection threshold is characterized by at least one of the pulse peak intensity, the pulse leading edge slope, the pulse trailing edge slope, the pulse threshold pulse width, the pulse coverage area, or the like. When the characteristic value of the first detection data exceeds the first detection threshold, it is determined that the high-reflectivity object exists within the detection range.

To reduce amount of data computation, as an optional manner, the pulse peak intensity in the first detection data can be collected as the characteristic value and the first detection threshold as a peak threshold, and thus it can be determined whether the pulse peak intensity in the first detection data exceeds a predetermined peak threshold, so as to determine whether the high-reflectivity object with the reflectivity greater than the predetermined first reflectivity exists within the detection range of the multiple channels.

In a case where the maximum detection distance of each channel is the same, each channel can be determined with a same peak threshold. If the maximum detection distance of the multiple channels is different, peak thresholds of the multiple channels can be different. In one specific embodiment, the peak threshold of a channel with closer maximum detection distance is less than that of a channel with farther maximum detection distance. For example, the peak threshold of a channel with the maximum detection distance of 50 m can be 1/2 of that of a channel with the maximum detection distance of 100 m.

Moreover, for the channel with the high-reflectivity object within the detection range, it can also be realized in different ways in specific implementation to control the light intensity of the laser corresponding to the channel to be less than the second light intensity. Two optional examples are shown below.

As one option example, for the channel with the high-reflectivity object within the detection range, the laser corresponding to the channel is controlled not to emit the light. As another option example, for the channel with the high-reflectivity object within the detection range, the light intensity of the laser corresponding to the channel is controlled to be a third light intensity, and the third light intensity is smaller than the second light intensity.

In specific implementation, the two solutions can be used separately or in combination. For example, for some of the channels with the high-reflectivity objects within the detection range, the lasers corresponding to the channels can be controlled not to emit the light. Moreover, for another some of the channels with the high-reflectivity objects within the detection range, the light intensity of the lasers corresponding to the channels can be controlled to be the third light intensity.

For the channel with the high-reflectivity object within the detection range, the laser corresponding to the channel is controlled not to emit the light or the light intensity of the laser corresponding to the channel is controlled to be the third light intensity smaller than the second light intensity, to cause that interference of the echoes from the high-reflectivity objects on the channels working in parallel can be suppressed and the crosstalk between the channels can be avoided.

In specific implementation, considering that an echo signal of a light-reflecting object is strong, which can be detected by the laser with the very weak light intensity, and thus to further reduce power consumption, the third light intensity can be determined not to exceed the first light intensity. In one optional example, the third light intensity is equal to the first light intensity.

At S13, the detecting result of the multiple channels for the single detection is determined based on at least one of the first detection data or the second detection data.

In specific implementation, the detecting result of the multiple channels for the single detection can be determined merely based on the first detection data, or merely based on the second detection data, or based on the first detection data and the second detection data. In a specific solution, it can be determined based on a specific condition of the first detection data and the light-emitting strategy of the multiple channels in the second sub-detection. In addition, different channels can use different ways for the multiple parallel detecting channels. Example illustration is performed in the following combined with some specific application scenarios.

In some examples of this disclosure, for the channel with no high-reflectivity object within the detection range, the detecting result within the detection range can be determined merely based on the second detection data, for example, the second detection data can be directly taken as the detecting result within the detection range in the detection round. Moreover, for the channel with the high-reflectivity object within the detection range, different processing methods can be used based on the light-emitting strategy of the laser corresponding to the channel in the second sub-detection. Specifically, the following examples can be used.

If at step S12, for the channel with the high-reflectivity object within the detection range, the laser corresponding to the channel is controlled not to emit the light, then at step S13, for the channel with the high-reflectivity object within the detection range, the detecting result of the detection channel for the single detection can be determined merely based on the first detection data.

If at step S12, for the channel with the high-reflectivity object within the detection range, the light intensity of the laser corresponding to the channel is controlled to be the third light intensity, then at step S13, for the channel with the high-reflectivity object within the detection range, the detecting result of the channel for the single detection can be determined merely based on the second detection data, or based on the first detection data and the second detection data.

In specific implementation, if the detecting result of the multiple channels for the single detection is determined based on the first detection data and the second detection data, as one optional manner, the echo signal in the first sub-detection and the echo signal in the second sub-detection can be directly superimposed as the detection data of the respective corresponding channels, and the detecting result of the respective corresponding channels for the single detection is determined based on the detection data of the respective corresponding channels. In this way, a sampling process merely needs to be performed once on the echo signal determined by the first sub-detection and the echo signal determined by the second sub-detection after superposition, which can simplify a system operation processing procedure.

It can be understood that the specific examples are not used to limit specific implementation of the step S13. In a specific application process, following specific example methods can be expanded, modified or optimized based on a specific situation, or other methods based on the first detection data and the second detection data of these two detection stages can be used to determine the detecting result of the multiple channels for the single detection.

It can be known from the above detection process that the detection method of the above embodiments is used, and for the multiple parallel detecting channels, the high-reflectivity object can be identified through the first sub-detection, and then the light-emitting strategy of the lasers of the multiple channels can be changed in the second sub-detection to reduce the influence of the echoes from the high-reflectivity objects on multiple channels detected simultaneously, thereby alleviating the crosstalk problem of the multiple channels working in parallel caused by the high-reflectivity object and improving the detection quality.

In addition, it can be determined whether the high-reflectivity object exists within the detection range of the multiple channels based on the first detection data in the second sub-detection. Further, on one hand, for the channel with no high-reflectivity object within the detection range, the laser corresponding to the channel is controlled to emit the light using the second light intensity, and the second light intensity is greater than the first light intensity; and on the other hand, for the channel with the high-reflectivity object within the detection range, the light intensity of the laser corresponding to the channel is further controlled to be less than the first light intensity.

It can be seen from the light-emitting strategy of the multiple channels in the second sub-detection that for the channel with no high-reflectivity object within the detection range, the laser corresponding to the channel is controlled to emit the light using the second light intensity greater than the first light intensity, to cause the object within the detection range to be detected normally. However, for the channel with the high-reflectivity object within the detection range, the light intensity of the laser corresponding to the channel is controlled to be less than the second light intensity, thereby reducing the interference to other channels and improving the overall detection quality while ensuring the detection of the high-reflectivity object within the detection range.

In addition, although the first light intensity in the first sub-detection is configured to enable the corresponding detector to receive the echo from the high-reflectivity object with the reflectivity greater than the predetermined first reflectivity threshold, if there is the conventional diffuse reflection object in the field of view of any channel, the echo signal of the channel can also be received by the detector, especially when the diffuse reflection object is relatively close. In view of this, by superposing the echo signal in the first sub-detection and the echo signal in the second sub-detection as the detection data of the respective corresponding channels, the detecting result of the respective corresponding channels for the single detection can be determined based on the detection data of the respective corresponding channels. During this detection process, both the high-reflectivity object and the conventional diffuse reflection object within the detection range (including the position at the relatively close distance) can be detected, thereby improving the detection capability.

As described in the previous embodiments, in specific implementation, in the at least one of the first sub-detection or the second sub-detection, for each parallel detecting channel, the laser corresponding to the channel can be controlled to emit the single laser pulse or the multi-pulse sequence.

For the emitted single laser pulse or multi-pulse sequence, to further improve anti-interference performance, in specific implementation, single laser pulses or multi-pulse sequences emitted by the lasers in the multiple parallel detecting channels can be encoded, and the single laser pulses or the multi-pulse sequences emitted by the lasers in different channels can have different encoding information. In the embodiments of this disclosure, a specific type and a possible dimension of the encoding information are not limited. As an optional example, the encoding information can include one or more of the number of pulses, pulse starting emission time, a time interval between multi-pulse, a pulse intensity ratio, and a pulse width ratio.

To make those skilled in the art understand and implement better, the detection process of the LiDAR in one specific application scenario is described in detail in the following.

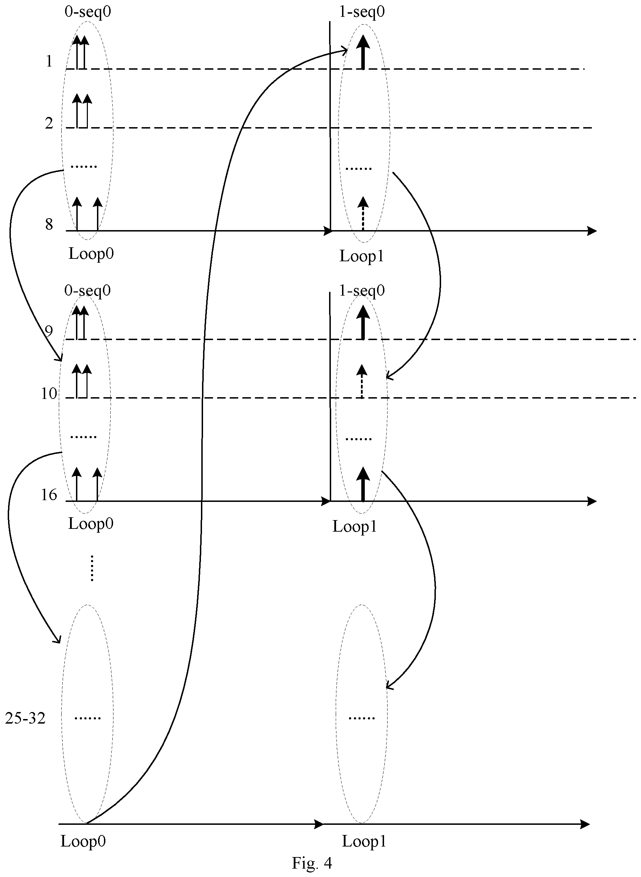

With reference to Fig. 4, taking a 32-line LiDAR as an example, in the single detection round, the lasers of 32 channels can be controlled to emit the light in turn based on the predetermined detection time sequence, and corresponding detectors are used to detect the object within the detection range. One detection round in one field of view includes two detection stages, such as a first sub-detection Loop0 and a second sub-detection Loop1.

In specific implementation, the detection can be performed in parallel by group. As a specific example, the 32 channels are divided into four groups, the lasers of eight channels are controlled to work in parallel at a time, and corresponding eight detectors receive the echo signal within a predetermined time window. After the time window passes, the lasers of another eight channels work in parallel, and corresponding eight detectors receive the echo signal, and so on. In this way, the detection in the first sub-detection Loop0 of the respective channels is completed in sequence to determine first detection data. After all channels complete the detection in the first sub-detection Loop0, the light-emitting strategy of the lasers corresponding to the channels in the second sub-detection Loop1 is changed based on the first detection data, and the detection in the second sub-detection Loop1 is performed for respective groups of channels in sequence to determine second detection data.

Among them, in the first sub-detection Loop0, to avoid the crosstalk caused by the high-reflectivity object, the lasers of the multiple parallel detecting channels can be controlled to emit the light using the first light intensity with a small value. The first light intensity is configured to enable the corresponding detector to merely receive the echo from the high-reflectivity object with the reflectivity greater than the predetermined first reflectivity threshold. In specific implementation, the first light intensity and a first response threshold of the corresponding detector can be determined based on expected distance measurement capability of the LiDAR, echo energy of the high-reflectivity object, and crosstalk degree between the channels, to cause that the detector can receive the echo from the high-reflectivity object within the detection range. As an example, given farthest detection distance of the LiDAR being 100 m and the Lambertian equivalent reflectivity of the high-reflectivity object being 50%, the lowest light intensity that it can respond to, that is, the first response threshold, is determined based on parameters of the detector. The detection light with the first light intensity emitted by the laser is enabled to be subjected to propagation attenuation of 200 m and reflection attenuation by the surface of the high-reflectivity object, and the light intensity of the echo reaching the detector is not lower than the first response threshold.

As another example, as shown in Fig. 4, in the first sub-detection Loop0, the multiple channels working in parallel all emit dual pulses, where to avoid the interference between the channels to other LiDARs, the dual pulses of the lasers of the respective channels are independently encoded through a time interval between pulses.

With reference to Fig. 4, in the first sub-detection Loop0:
Firstly, channels 1 to 8 work in parallel, respective channels emit first pulses in parallel, and respectively emit second pulses based on a predetermined time interval between the pulses, and the detectors of the channels 1 to 8 receive signals in the predetermined time window. After the time window passes, channels 9 to 16 work in parallel, respective channels emit the first pulses in parallel, and respectively emit the second pulses based on the predetermined time interval between the pulses, and the detectors of the channels 9 to 16 respectively receive the signals in the predetermined time window, and so on up to channels 25 to 32, light emission and detection are performed for the multiple channels working in parallel by group, to cause that the first detection data corresponding to channels 1 to 32 in the first sub-detection Loop0 can be determined.

In the first sub-detection Loop0, the multiple channels working in parallel emit the light using the low light intensity, and the reflection echo from the high-reflectivity object can merely reach a response threshold of the detector. Therefore, even the echo from the high-reflectivity object is not too strong, and thus the echoes of other channels working in parallel can be avoided from being seriously distorted, to cause that the respective channels can identify an effective signal by decoding.

Continuously with reference to Fig. 4, in the second sub-detection Loop1:
The light-emitting strategy of the corresponding channel in the second sub-detection Loop1 is changed based on the detection data in the first sub-detection Loop0. Moreover, the light emission in the second sub-detection is respectively performed for the multiple channels working in parallel using a similar time sequence, and the corresponding echo signal is detected by the detector to determine the second detection data.

In specific implementation, in the second sub-detection Loop1, the lasers corresponding to the respective channels can be controlled to emit the light using the second light intensity meeting the normal ranging capability of the LiDAR. As one specific example, predetermined measurement distance of the LiDAR is 150 m, and the second light intensity can be determined to meet the needs that the detector can receive the echo signal from the object with the reflectivity of 10% at 150 m.

However, if in the first sub-detection Loop0, the light-emitting strategy in the second sub-detection Loop1 can be changed for the channel that receives the echo of the high-reflectivity object with the reflectivity greater than the predetermined first reflectivity threshold, that is, for the channel with the high-reflectivity object within the detection range. Two optional solutions are shown below combined with Fig. 4:
1) In the second sub-detection Loop1, the corresponding laser is controlled not to emit the light.
   With reference to Fig. 4, if it is determined that there is the high-reflectivity object at the azimuth of the channel 2 detected by the detector in the first sub-detection Loop0 based on the first detection data in a certain detection round, then in the second sub-detection Loop1, the channel 2 does not emit any pulse (represented by blank in Fig. 4), to cause that a strong optical signal emitted by the laser in this channel can be prevented from being reflected by the high-reflectivity object and causing the signal crosstalk generated by other channels working in parallel.
2) In the second sub-detection Loop1, the corresponding light intensity is controlled to be the third light intensity, and the third light intensity is smaller than the second light intensity.

As shown in Fig. 4, if it is determined that there are high-reflectivity objects in the channel 8 and the channel 10 in the first sub-detection Loop0 based on the first detection data in the first sub-detection Loop0 in a certain detection round, then the lasers of channels 1 to 7 of channels 1 to 8 working in parallel are firstly controlled to emit the light using the second light intensity (a single thick solid arrow in Fig. 4 is configured to represent that the laser emits the single laser pulse, with the light intensity greater than the first light intensity) and the laser of the channel 8 is controlled to work using the third light intensity (a dotted arrow in Fig. 4 is configured to represent that the light intensity is lower than the first light intensity) based on a light-emitting time sequence in the second sub-detection Loop1. Then, the lasers of the channel 9 and channels 11 to 16 of channels 9 to 16 working in parallel are controlled to emit the light using the second light intensity (the single thick solid arrow in Fig. 4 is configured to represent that the laser emits the single laser pulse, with the light intensity greater than the first light intensity), and the laser of the channel 10 is controlled to work using the third light intensity (the dotted arrow in Fig. 4 is configured to represent that the light intensity is lower than the first light intensity.)

For sake of simplicity in the above, two solutions of changing the light-emitting strategy in the second sub-detection are described combined with a same figure. In specific implementation, the two solutions can also be implemented in combination. For example, if it is determined that there are high-reflectivity objects in the channel 2, the channel 8, and the channel 10 based on the first detection data in the first sub-detection Loop0, then in specific embodiment, for the channels 1 to 8 working in parallel, the laser of the channel 2 can be controlled not to emit the light, while the laser of the channel 8 can be controlled to emit the light using the third light intensity, and the lasers of the channel 1 and channels 3 to 7 can emit the light using the second light intensity based on a predetermined detection time sequence in the second sub-detection Loop1. Then, for the channels 9 to 16 working in parallel, the lasers of the channel 9 and channels 11 to 16 are controlled to emit the light using the second light intensity, and the laser of the channel 10 is controlled to work using the third light intensity.

In the above solutions, for the laser that detects the channel with the high-reflectivity object in the first sub-detection Loop0, because the light intensity of the laser is controlled to be the third light intensity smaller than the second light intensity in the second sub-detection Loop1, the laser can be received by the corresponding detector after being reflected by the high-reflectivity object, and waveform characteristics of the echo signals of other channels are not affected, thereby reducing the crosstalk between the channels working in parallel and improving the detection quality.

In addition, the single detection round includes the detection process of the above two detection stages, where because the channel with the high-reflectivity object can not emit the light or emit with reduced light intensity (corresponding to light-emitting power) in the field of view (i.e., the detection range) in the second sub-detection Loop1, the echo signal received by the channel normally detecting in the second sub-test Loop1 is not particularly strong, to cause the crosstalk to be small, and the detection can be made using a single pulse (i.e., the laser of the corresponding channel emits the single laser pulse), thereby reducing the power consumption of a system.

In the single detection round, it can also be realized in different ways to control the lasers of the multiple channels to emit the light based on a predetermined light-emitting time sequence.

One is to control the lasers of all channels to emit the light in sequence based on the first sub-detection and the second sub-detection of all channels in one detection round, that is, after the detection in the first sub-detection of all channels is completed, all channels are controlled to complete the detection in the second sub-detection based on the predetermined detection time sequence.

In specific implementation, all channels can be controlled to detect in parallel in the first sub-detection, and then all channels can be controlled to detect in parallel in the second sub-detection. Alternatively, all channels of the LiDAR can be divided into multiple groups based on the detection time sequence, and each group of channels includes the multiple parallel detecting channels, and the lasers of all channels can be firstly controlled to emit the light by group in sequence in the first sub-detection, and then the lasers of all channels can be controlled to emit the light by group in sequence in the second sub-detection, as shown in an application scenario in Fig. 4.

In the above solution, the detection in the second sub-detection is started after the detection in the first sub-detection is finished. In a specific application process, there can be a long duration in the first sub-detection. When a same channel detects in the second sub-detection, it has already turned a certain angle with respect to the first sub-detection. Therefore, there can be an angle deviation in the field of view between the two detections. The high-reflectivity object detected in the first sub-detection can have deviated from the field of view when the high-reflectivity object is detected in the second sub-detection of the same channel, thereby causing deviation in feedback.

To solve the above problem, the lasers of all channels can be controlled to emit the light by group in sequence based on the first sub-detection and the second sub-detection in the single detection round. More specifically, the lasers of one or more groups of channels are controlled to emit the light by group in sequence based on the first sub-detection and the second sub-detection in the single detection round. That is to say, in one detection round, after one or more groups of channels complete their own first sub-detection and second sub-detection, the first sub-detection and the second sub-detection of next one or more groups of channels can be completed, until the first sub-detection and the second sub-detection of all channels are completed.

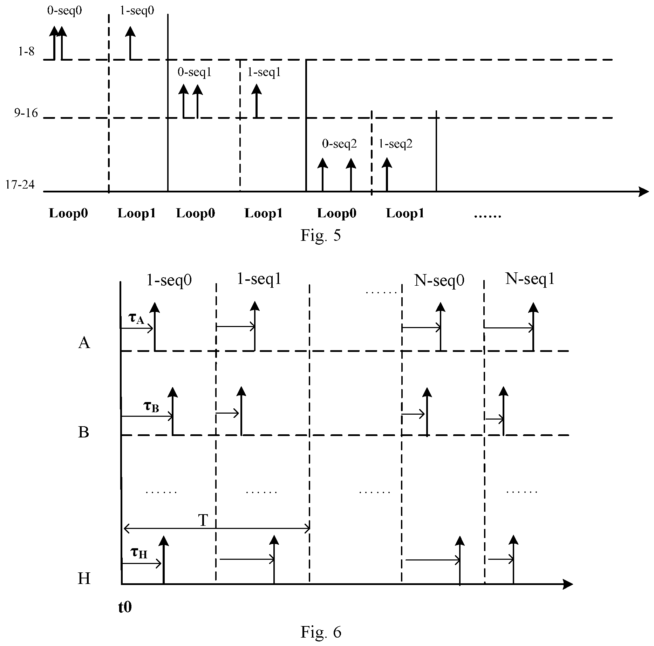

For ease of understanding, the following description is performed with reference to a schematic diagram of a detection time sequence control method shown in Fig. 5. As an example, merely a detection control time sequence of 24 channels is shown. Here, the 24 channels are divided into three groups, each group has eight channels that can work in parallel. Based on the predetermined detection time sequence, in one detection round, the detection of channels 1 to 8 in the first sub-detection and the second sub-detection is firstly completed, and then the detection of channels 9 to 16 in the first sub-detection and the second sub-detection is performed, and finally the detection of channels 17 to 24 in the first sub-detection and the second sub-detection is performed. It can be seen that in the above solution, the first sub-detection and the second sub-detection of different groups/herds are alternately performed, and in this way, the angular deviation of the same channel between the two detection stages can be reduced, to cause that accuracy of the first detection data determined by the first sub-detection as feedback data can be improved for detection change in the second sub-detection.

As described above, for the multiple parallel detecting channels, to further improve their anti-crosstalk performance, in the second sub-detection and for the channels that emit the light based on a changed light-emitting strategy, the lasers corresponding to the respective channels can be controlled to emit multi-pulse sequences (e.g., the dual pulses) and different encoding information can be determined for the multi-pulse sequences of the lasers of the multiple parallel detecting channels. For example, the encoding information can include at least one of the number of pulses, the pulse starting emission time, the time interval between the multi pulses, the pulse intensity ratio, and the pulse width ratio.

Specifically, for the multiple parallel detecting channels, different starting emission time can be determined for each channel in the second sub-detection to realize change of the pulse starting emission time thereof. For example, intervals between the starting emission time of the lasers of the respective channels are different by a fixed value or in a predetermined ratio, or a random time jitter *τ* is applied to each channel on a basis of predetermined pulse starting emission time t0, and t0+τ is taken as actual pulse starting emission time of the lasers of the respective channels.

In specific implementation, to further improve the anti-interference performance, the encoding information of the multiple channels in the current detection round can be changed based on the detecting result of the multiple parallel detecting channels in the previous detection round. One optional example is given below to illustrate how to change.

If based on an original light-emitting strategy (used in an initial setting or a current detection process), the lasers of the multiple channels emit the light in parallel (work in parallel) at each time sequence (Sequence) with same pulse starting emission time, the lasers of the multiple parallel detecting channels at a next Sequence start to emit the light at same predetermined time and have the same pulse starting emission time. In this case, if there is the interference signal, at least one of time of flight ("ToF") values or positions corresponding to interference points of these multiple channels have high correlation, to cause that the interference points can be misjudged as valid data points. To solve this problem, the following expansion solution can be used.

In specific implementation, there are many ways to change the pulse starting emission time of the lasers. For example, for the multiple parallel detecting channels, the laser of each channel can be determined with different starting emission time.

For example, intervals between emission time of the lasers of the respective channels are different by the fixed value or in the predetermined ratio.

As another example, the random time jitter τ is applied to each channel on the basis of the predetermined pulse starting emission time t0, and the t0+τ is taken as the actual pulse starting emission time of the lasers of the respective channels.

With reference to a schematic diagram of a principle of changing pulse starting emission time of multiple channels shown in Fig. 6, predetermined pulse starting emission time of multiple channels A to H working in parallel is t0, and the corresponding random time jitter values for each channel are τ_{A} to τ_{H} in sequence. Because time jitter values of different channels are random, which can be considered to be different from each other, the pulse starting emission time when the lasers of the multiple channels working in parallel emit the light is different, and the interference signal does not have this randomness. Therefore, ToF values of noise points are quite different and have no correlation even if the noise points are generated by the multiple channels, and then the noise points can be determined as isolated points and filtered by combining a point cloud noise filtering method shown in the previous embodiments.

The detection process is improved by changing the pulse starting emission time through random jitter, which has low power consumption and can effectively reduce the noise points.

Because each detection round T includes two detection stages, the pulse starting emission time corresponding to the respective channels in both the first sub-detection and the second sub-detection changes, which becomes t0+τ_{A} to t0+τ_{H} in sequence.

The pulse starting emission time of the lasers of the channels with echoes overlapping in time is changed when the echoes determined by the first sub-detection at a previous horizontal azimuth overlap each other in time for the multiple channels working in parallel, to cause the pulse starting emission time of the multiple channels with the echoes overlapping in time in the first sub-detection in the current detection round to be different.

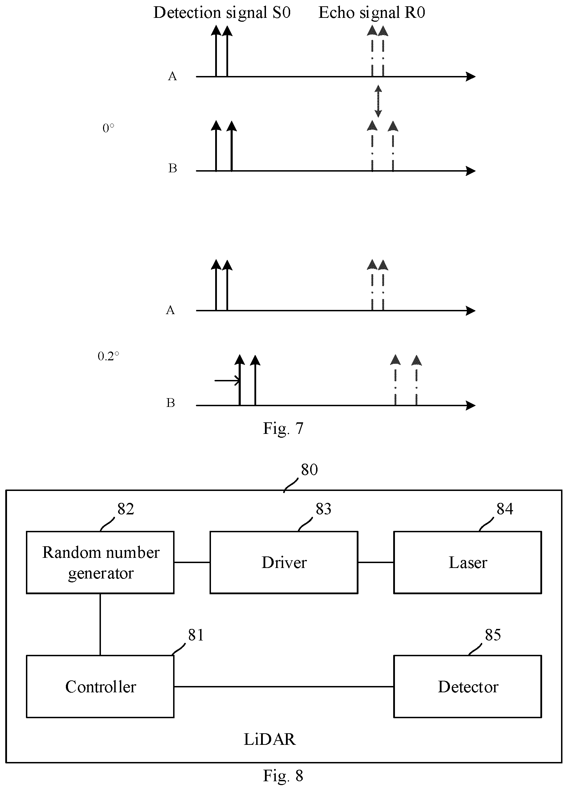

With reference to Fig. 7, another schematic diagram of changing pulse starting emission time of multiple channels is shown. Among them, the solid arrow is configured to represent a detection signal S0 emitted by the laser and the dotted arrow is configured to represent an echo signal R0. Fig. 7 shows that when the horizontal azimuth is 0° (the first sub-detection at the previous horizontal azimuth), the echo signals of the channel A and the channel B overlap in time with same starting time, resulting in echo interference. In view of this, in the first sub-detection in a next current detection round, for example, the corresponding horizontal azimuth is 0.2°, the pulse starting emission time of the lasers of the channel A and the channel B is changed, for example, a random disturbance value τB is added to the pulse starting emission time of the laser of the channel B, to cause that it is staggered from the pulse starting emission time of the laser of the channel A, and correspondingly, the echo signals of the two channels are separated, thereby avoiding mutual interference between different channels.

It can be understood that the above is merely example illustration. In specific implementation, feedback and change based on angles are not limited to the first sub-detection of different detection rounds. In specific implementation, the pulse starting emission time of the lasers of the respective channels in the at least one of the first sub-detection or the second sub-detection at the current azimuth (corresponding to the current detection round) can be changed based on a feedback relationship of the echo signals of the respective channels in the at least one of the first sub-detection or the second sub-detection at the previous horizontal azimuth (corresponding to the previous detection round.)

In specific implementation, to generate the random jitter value as needed in the detection process, a random number generator can be built in the LiDAR. With reference to a structural schematic diagram of a control system for a LiDAR shown in Fig. 8, a LiDAR 80 includes a controller 81, a random number generator 82, and drivers 83, lasers 84, and detectors 85 corresponding to the respective channels. A working principle can be described in detail with reference to Fig. 8 in the following.

The controller 81 can control the random number generator 82 to start to work, generate random disturbance values of the respective channels for the multiple channels working in parallel, and output them to the drivers 83 and feedback them to the controller 81, when it is determined that features (e.g., at least one of the corresponding ToF values or positions) of interference points of the multiple parallel detecting channels have the high correlation based on the detecting result in the previous detection round.

The drivers 83 corresponding to the respective channels respectively perform superimposing based on the predetermined pulse starting time and the random disturbance values of the respective channels to determine actual pulse starting time corresponding to the respective channels, and drive the lasers 84 of the respective channels to emit the light at the actual pulse starting time.

The detectors 85 corresponding to the respective channels perform echo detection in the detection round to determine the detecting result and transmit it to the controller 81.

Further, the controller 81 can determine a more accurate ToF value by subtracting the corresponding starting pulse emission time from receiving time of the echo signal based on the detecting result returned by the detectors of the respective channels.

In specific implementation, the random number generator 82 can be realized in hardware or by software algorithm, for example, by hash algorithm. The embodiments of this disclosure do not make any limitation on a specific implementation form thereof.

Embodiments of this disclosure further provide a LiDAR that can realize the above detection method. To make those skilled in the art better understand and implement, corresponding introduction can be made in the following combined with drawings.

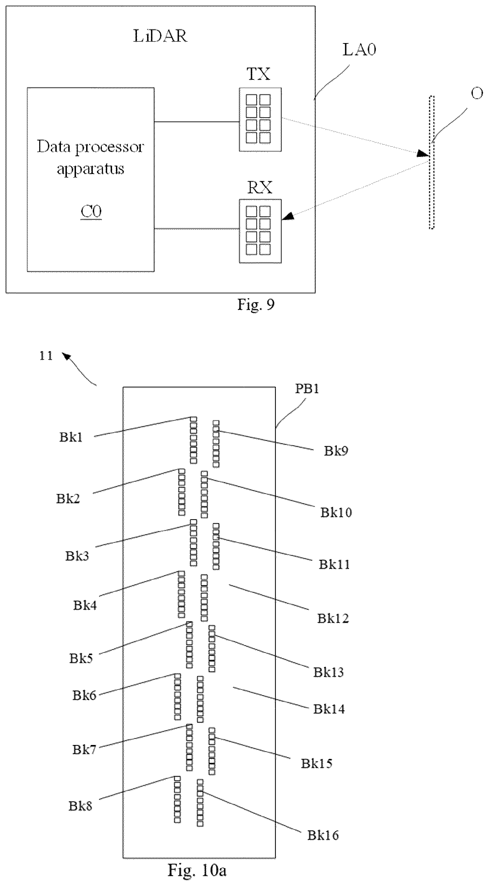

With reference to a structural schematic diagram of a LiDAR shown in Fig. 9, in some embodiments of this disclosure, as shown in Figure 9, a LiDAR LA0 includes a light-emitter module TX, a light-detector module RX, and a data processor apparatus C0, where
the light-emitter module TX includes multiple lasers;
the light-detector module RX includes multiple detectors respectively provided corresponding to the multiple lasers to form multiple channels, where the multiple detectors are configured to collect echoes after lasers of the corresponding channels emit light to irradiate objects O; and
the data processor apparatus C0 configured to perform detection by group based on a predetermined detection time sequence for all channels in a single detection round, where the detection is performed in parallel for each group of channels, and a single detection of each channel includes a first sub-detection and a second sub-detection, and where multiple parallel detecting channels includes: controlling lasers of the channels to emit the light using a first light intensity in the first sub-detection, and determining first detection data through the detection by detectors corresponding to the channels, where the first light intensity is configured to enable the corresponding detectors to receive echoes from high-reflectivity objects with reflectivity greater than a predetermined first reflectivity threshold; changing a light-emitting strategy of the lasers of the multiple channels based on the first detection data in the second sub-detection, and determining second detection data through the detection by the corresponding detectors; and determining a detecting result of the multiple channels for a single detection based on at least one of the first detection data or the second detection data.

In specific implementation, the data processor apparatus is configured to determine whether a high-reflectivity object with the reflectivity greater than the first reflectivity threshold exists within a detection range of the multiple channels based on the first detection data in the second sub-detection. control, for a channel with no high-reflectivity object within the detection range, a laser corresponding to the channel to emit the light using a second light intensity, and the second light intensity is greater than the first light intensity; and control, for a channel with the high-reflectivity object within the detection range, light intensity of a laser corresponding to the channel to be less than the first light intensity.

Specifically, the data processor apparatus can be a single chip microcomputer, or any chip, apparatus or device with a data processing capability such as a field programmable gate array (FPGA), a single-core or multi-core processor, and a specific hardware structure thereof is not limited in the embodiments of this disclosure.

It can be understood that Fig. 9 is merely schematic illustration of a relationship between corresponding functional modules of the LiDAR, and is not intended for expressing an actual mechanical structure or a position and layout relationship of the LiDAR.

Specific implementation manners, principles, application scenarios, and advantages of the above LiDAR can refer to corresponding description in the above detection method embodiments, which can be not repeatedly described herein.

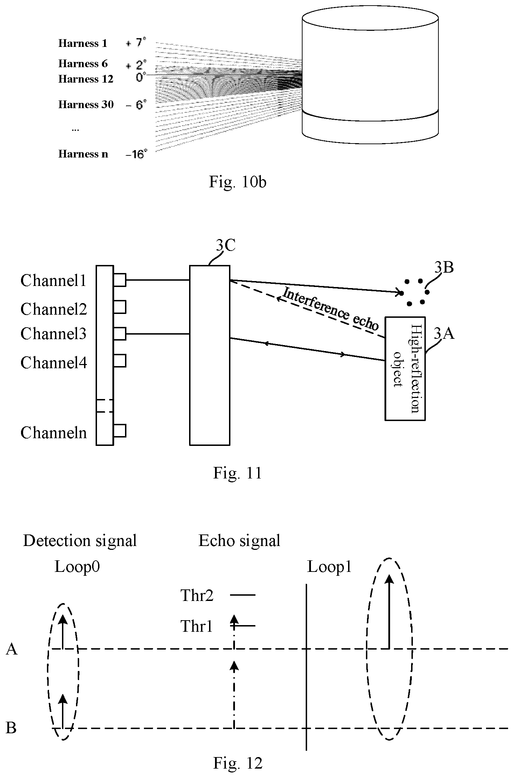

With reference to a planar structural schematic diagram of a light-emitter device shown in Fig. 10a and a scanning field of view of a LiDAR shown in Fig. 10b, as another specific example, a light-emitter device 11 includes an emission circuit board PB 1 and multiple light-emitting line arrays Bk1 to Bk16 provided on the emission circuit board PB1, where each light-emitting line array includes multiple light-emitter units, for example, each light-emitting line array includes eight lasers shown in Fig.10a. Correspondingly, the light-detector device can include a light-detecting line array (e.g., the detector) composed of multiple light-detector units. The laser of the LiDAR emits the light, and the emitted light is deflected by an emission lens (group), and when it is emitted from the LiDAR, it is directed to different directions. In the LiDAR where one laser and one detector form one detection channel, each channel is responsible for the detection at one vertical angle (typically a direction parallel to a rotation axis of the LiDAR, while the horizontal angle is typically a direction perpendicular to the rotation axis of the LiDAR), and all channels form a vertical field of view of the LiDAR. Fig. 10b shows n channels/lines, where n can be 16, 32, 40 or 64 or 128 or other numbers, and the vertical field of view ("FOV") is (-16° ~ 7°), which is composed of vertical detection angles of all lasers. Among them, a vertical angle of a topmost laser is 7°, which is responsible for distance detection at an azimuth of 7°, and a vertical angle of a bottommost laser is -16°, which is responsible for the distance detection at an azimuth of -16°.

It should be noted that for a multi-line LiDAR, the number of scanning lines, also known as the number of scanning lines, means the number of channels for the laser emission and reception, or the minimum number of addressable channels. Typically, the number of lasers and the number of detectors can be configured at the ratio of 1:1. The number of scanning lines is equal to the number of lasers or detectors, and also equal to the number of emitting channels or receiving channels. In addition, there is the case where the multiple detectors share one laser, or vice versa, the multiple lasers share one detector, or even there can be the overlapping situation. In such a case, the number of scanning lines can be determined by distinguishing the minimum number of addressable gated channels.

With reference to a schematic diagram of a specific scenario of crosstalk between channels for a LiDAR shown in Fig. 11, as shown in Fig. 11, the LiDAR includes the lasers of the multiple channels (e.g., Channel1 to Channeln, where n is an integer greater than 1) .

In a certain detection, lasers corresponding to Channel1 and Channel3 emit the light in parallel, and an emitted detection beam is emitted to an external environment through an optical assembly 3C, where there is an obstacle 3A at a detection orientation corresponding to Channel3, but there is no object at an orientation corresponding to Channel1.

However, because the obstacle 3A is the high-reflectivity object, when it receives the beam emitted by the laser from the Channel3, a reflected echo is not only transmitted to a detector corresponding to the Channel3 through an optical component 32 (for convenience of understanding, the detection beam emitted by Channel3 and the echo reflected by the obstacle 3A are drawn on a same optical path, and optical paths of the two can be different in an actual detection process), but also transmitted to other parallel light-emitting channels, such as the detector in the Channel1. The beam reflected by the obstacle 3A is transmitted to the detector in the Channel1 through the optical component 32, to cause the detector in the Channel31 to detect a false object 3B at the position or the angle where there is no object originally, thereby constructing point cloud that does not reflect real obstacle information, commonly known as the "ghost".

The existence of the high-reflectivity object in the field of view is the common situation in the unmanned scenario. For example, the road sign is the typical high-reflectivity object, and the road sign is the target recognition object that the LiDAR often encounters when it is applied to the autonomous driving. Therefore, the crosstalk problem between channels of the LiDAR is urgently to be solved.

In view of a signal crosstalk problem between the multiple parallel light-emitting channels of the LiDAR, embodiments of this disclosure provide a corresponding LiDAR and a detection solution thereof. When the LiDAR is used for the detection, the detection is performed by group and in turn for all channels to be detected until the detection of all channels to be detected is completed, and then a next round of detection is performed. All channels detecting in a same group emit the light in parallel. Among them, the single detection of each channel includes two detection actions, respectively called the first sub-detection and the second sub-detection, and based on the echo signal in the first sub-detection, the light-emitting strategy of the laser of the parallel light-emitting channel is changed in the second sub-detection thereof or the light-emitting strategy in the first sub-detection of the channel of the subsequent round of the detection is correspondingly changed.

Because the echo signals in the first sub-detection of the respective parallel light-emitting channels can reflect the features of the obstacles within the detection range of the respective channels and the possible crosstalk between the respective parallel channels, for each channel, after the light-emitting strategy of the laser of the parallel light-emitting channel in the at least one of the second sub-detection or the first sub-detection of the subsequent round is changed based on the echo signal in the first sub-detection corresponding to the channel, the crosstalk between the echo signals of the multiple parallel light-emitting channels can be reduced during the at least one of the second sub-detection or the first sub-detection of the subsequent round, thereby reducing the crosstalk between the parallel light-emitting channels as a whole and improving the detection quality.

It should be noted that for the LiDAR, the direction parallel to the rotation axis can be determined as the vertical direction, and the direction perpendicular to the rotation axis can be determined as the horizontal direction. The single detection means the detection process of determining the distance or the obstacle information of the obstacle at the detection orientation determined for the channel. The group is the concept that the channels to be detected in the current orientation are grouped, and the round means the detection of the channels to be detected at the next orientation after the detection for all channels to be detected at the current orientation is completed. For example, at the current horizontal azimuth of 0°, 128 channels need to be detected, and each eight channels form one group and emit the light in parallel, with a total of 16 groups. A first group can control lasers 1, 3, 5, 7, 9, 11, 13, and 15 to emit the light, and then the second group can control lasers 2, 4, ..., to emit the light, a sixteenth group controls remaining eight lasers to emit the light, and corresponding detectors receive the echoes. After the detection is performed for all channels at this orientation, a next round of detection is started, that is, the detection is performed at the next horizontal azimuth, such as 0.2°. For example, there are 32 channels to be detected, and four channels form one group and emit the light in parallel, and the detection is performed in eight groups.

To make those skilled in the art have the clearer understanding of the technical concept, technical principle, advantages, or the like, contained in the embodiments of this disclosure, the detailed description is made in the following with reference to the drawings, through the specific embodiments, and combined with the specific application scenarios, or the like.

In the embodiments of this disclosure, the LiDAR can include the multiple lasers and the multiple detectors, and the laser and the detector form the corresponding channel. In specific implementation, based on design needs and practical application scenarios of the LiDAR, in the channel composed of the laser and the detector, one channel can be composed of one laser and one detector, or composed of one laser and corresponding multiple detectors, or composed of one detector and corresponding multiple lasers. The embodiments of this disclosure do not limit the specific structure of the channel of the LiDAR, as long as the channel can detect the obstacle.

To understand the basic detection principle of the multi-channel LiDAR, the detection method for the multi-channel LiDAR can be briefly introduced.

Firstly, for all channels, the detection can be performed by group, where the detection includes: the laser emits an optical signal, the detector receives the echo signal reflected by the obstacle, and detection information of the obstacle is determined based on the echo signal, such as distance and reflectivity.

Each group of detecting lasers can emit the light in parallel. It should be noted that an expression "emit light in parallel" means that the multiple channels complete signal transmission and echo reception within a time window, and light-emitting time of these channels can overlap each other, but it is not beneficial to emit the light or receive the light at the same time. To complete the detection of the distance between the obstacle and the LiDAR once, the laser can emit the light at a moment t1, which returns after encountering the obstacle at farthest distance dmax that the LiDAR can detect, and the echo is received by the detector at a moment t2, and the time window can be △t ≈ dmax/2C (C is speed of light) ≈ t2-t1. As a specific example, it can be that respective lasers in each group start to emit the light at a same moment, or it can be that all lasers in each group are in a light-emitting state at a certain moment during the detection process, or the lasers in each group emit the light in sequence during a same detection period of time. To avoid the signal crosstalk, the multiple channels working in parallel can be selected as channels with relatively large intervals. For example, continuously with reference to Fig. 2, at the emitting end, for the light-emitter device 11, the first lasers in the light-emitting line arrays BK1 to BK8 in the longitudinal direction from top to bottom can be selected to emit the light in parallel.

To solve the crosstalk problem between the parallel light-emitting channels, the LiDAR can determine the detection information of the obstacle based on the following detection method.

For the single detection of each channel, the single detection can include the first sub-detection and the second sub-detection, where the light-emitting strategy of the laser of the parallel light-emitting channel in the at least one of the second sub-detection or the first sub-detection of the subsequent round is correspondingly changed based on the echo signal in the first sub-detection.

In specific implementation, because echo signal strength can accurately reflect the features of the obstacle, such as the distance and the reflectivity, the emitted light intensity of the laser of the parallel light-emitting channel in the at least one of the second sub-detection or the first sub-detection of the subsequent round is changed correspondingly based on the strength of the echo signal in the first sub-detection, to cause the emitted light intensity of the laser of the parallel light-emitting channel in the at least one of the second sub-detection or the first sub-detection of the subsequent round to change, thereby reducing the crosstalk between the parallel light-emitting channels and improving the detection quality.

In a specific application process, applicants found that when there is the high-reflectivity object within the detection range of the channel, the crosstalk problem is easily caused in other parallel light-emitting channels. To identify the channel with the high-reflectivity object, in some embodiments of this disclosure, the emitted light intensity of the laser of the parallel light-emitting channel in the first sub-detection can be the first light intensity, and the first light intensity enables the detector to merely detect the echo signal from the high-reflectivity object with the intensity greater than the predetermined first threshold.

When the detection distance and the emitted signal intensity are determined, the echo signal strength can reflect surface features of the obstacle, such as reflectivity. Therefore, based on the strength of the echo signal in the first sub-detection, the high-reflectivity object within the detection range of the detector can be identified.

Specifically, because the first light intensity emitted in the first sub-detection is relatively small, and is not greater than the intensity that enables the detector to detect the high-reflectivity object with the reflectivity greater than the predetermined first threshold. Therefore, if the strength of the echo signal in the first sub-detection is greater than a certain threshold (e.g., a first threshold Thr1), it means that there is a high probability of the existence of the high-reflectivity object within the detection range of the channel in the first sub-detection.

To complete one detection, each channel can emit the light to range twice, that is, the first sub-detection and the second sub-detection. Therefore, in practical application, it can be roughly determined what the obstacle is encountered in the channel at the detection orientation based on the signal strength interval where the echo signal in the first sub-detection is located, and then the light-emitting strategy of the laser of the parallel light-emitting channel in a next second sub-detection can be controlled based on conditions of the obstacle for more accurate detection.

Embodiments of this disclosure further provide another solution. Because after the detection of all channels that need to be detected at the current orientation is completed, a next detection can be performed at a next orientation, a different light-emitting strategy than that used at the current orientation can also be used in the first sub-detection of the subsequent round.

In specific implementation, the above two solutions can be combined for use, or one of the two solutions can be selected. Both solutions are to correspondingly change a subsequent detection strategy based on the determined detecting result, so as to perform more accurate detection in a targeted manner.

In some embodiments of this disclosure, a strength interval where the echo signal strength in the first sub-detection is located is determined based on a magnitude relationship between the strength of the echo signal in the first sub-detection and the first threshold and the second threshold, and then different change methods can be used to control the laser of the corresponding channel to emit the light using the corresponding light intensity in the at least one of the second sub-detection or the first sub-detection of the subsequent round.

In a specific application process, the applicants further studied and found that when the strength of the echo signal in the first sub-detection is between the first threshold and the second threshold, it is difficult to determine whether the crosstalk problem occurs between the parallel light-emitting channels. In view of this problem, for the channel with the echo signal with the strength greater than the first threshold and less than the second threshold, the laser of the channel is controlled to emit the light using the second light intensity in the at least one of the second sub-detection or the first sub-detection of the subsequent round, where the second light intensity is different from the first light intensity.

As an optional example, the second light intensity can be greater than or less than the first light intensity. In specific implementation, to avoid the crosstalk to other channels due to excessive second light intensity, in some embodiments of this disclosure, the second light intensity can be slightly greater than the first light intensity, and in other embodiments of this disclosure, the second light intensity can be slightly less than the first light intensity. In other words, a difference value between the second light intensity and the first light intensity can be smaller than a predetermined light intensity threshold, and the predetermined light intensity threshold can be determined based on the actual application scenario and specific parameters of the LiDAR.

For the channel with the echo signal with the strength greater than the first threshold and less than the second threshold, by controlling the laser to emit the light using the second light intensity different from the first light intensity in the at least one of the second sub-detection or the first sub-detection of the subsequent round, the interference to other channels can be reduced and the overall detection quality can be improved while ensuring the detection of the high-reflectivity object within the detection range.

In specific implementation, the first light intensity and the second light intensity and a threshold of the echo signal detected by the corresponding detector can be determined based on the expected distance measurement capability of the LiDAR and the echo energy of the high-reflectivity object, to cause that the detector can receive the echo from the high-reflectivity object within the detection range.

In some embodiments of this disclosure, there can be cases where the strength of the echo signal in the first sub-detection is less than the first threshold or greater than the second threshold. Based on the above two cases, the following light-emitting strategy can be used.

As one optional example, for the channel with no echo signal with the strength greater than the first threshold within the detection range, the laser of the channel is controlled to emit the light using the third light intensity in the at least one of the second sub-detection or the first sub-detection of the subsequent round, and the third light intensity is not less than the second light intensity.

As another optional example, for the channel with the echo signal with the strength not less than the second threshold within the detection range, the laser of the channel is controlled not to emit the light in the second sub-detection, or the laser of the channel is controlled to emit the light using a fourth light intensity in the at least one of the second sub-detection or the subsequent round, and the fourth light intensity is less than the second light intensity and greater than the first light intensity.

In specific implementation, the above multiple solutions can be used separately or in combination. For example, for the multiple parallel light-emitting channels, for the channel with the high probability of the existence of the high-reflectivity object within the detection range, the laser of the channel can be controlled not to emit the light or to emit the light using the fourth light intensity in the second sub-detection. However, for the channel with the high probability of no existence of the high-reflectivity object within the detection range, the laser of the channel can be controlled to emit the light using the third light intensity in the second sub-detection.

It can be seen from the above light-emitting strategy of the channel that for the channel with no echo signal with the strength greater than the first threshold within the detection range, the laser corresponding to the channel is controlled to emit the light using the third light intensity not less than the second light intensity, so as to normally detect the obstacle that can exist at the detection orientation. For the channel with the echo signal with the strength not less than the second threshold within the detection range, the laser of the channel is controlled not to emit the light in the second sub-detection or to emit the light using the fourth light intensity, and the fourth light intensity is smaller than the second light intensity, to cause that the interference of the echoes from the high-reflectivity objects on the respective channels working in parallel can be suppressed, thereby avoiding the crosstalk between the channels and improving the overall detection quality.

To make those skilled in the art understand and implement better, a light emission and detection process of the channel corresponding to the LiDAR in a specific application scenario is described in detail in the following.

In specific implementation, for the LiDAR with the multiple channels, ranging of all channels can be performed by group and in turn, and the ranging can be performed in parallel for channels in a same group. As a specific example, for the LiDAR with 128 channels, the 128 channels can be divided into 16 groups, with eight channels in each group detecting in parallel; or the 128 channels are divided into 32 groups, with four channels in each group detecting in parallel.

It can be understood that the above grouping of the channels in the LiDAR is merely illustrative, and the embodiments of this disclosure do not limit a specific grouping result of the channels. For example, the number of channels determined by the grouping can also be inconsistent, for example, if divided into 16 groups, some groups can have 10 channels for parallel detection, and some groups can have 6 channels for parallel detection. As another example, all channels can be divided into one group, and all channels work in parallel in one detection.

In some embodiments of this disclosure, for the LiDAR with multiple groups of channels, in performing the detection, the laser of the channel in each group can emit the light in parallel, and the detection of any channel in this group of channels includes the first sub-detection and the second sub-detection, to cause that the emitted light intensity of the channel in the second sub-detection can be changed based on the strength of the echo signal in the first sub-detection.

With reference to a schematic diagram of a light emission and detection process of a channel corresponding to a LiDAR in a specific application scenario, provided in embodiments of this disclosure shown in Fig. 12, as shown in Fig. 12, taking two channels in the LiDAR (e.g., channel A and channel B) emitting the light in parallel as an example, for the single detection, the channel A and the channel B can emit the light based on the corresponding light-emitting strategy, and the object within the detection range can be detected by using the corresponding detector. Moreover, the single detection of the channel A and the channel B can both include two sub-detection processes, that is, the first sub-detection (hereinafter referred to as Loop0) and the second sub-detection (hereinafter referred to as Loop1.)

As a specific example, in the first sub-detection Loop0, to avoid the crosstalk caused by the high-reflectivity object, both the channel A and the channel B emitting the light in parallel can be controlled to emit the light using the first light intensity with the small value, where the first light intensity enables the detector to merely detect the echo signal from the high-reflectivity object with the strength greater than the predetermined first threshold.

It should be noted that regarding the small light intensity used in the first sub-detection Loop0, the emitted light intensity and a corresponding detector threshold can be specifically determined based on the expected distance measurement capability of the LiDAR and in combination with the echo energy of the high-reflectivity object, to cause that the detector can receive the echo from the high-reflectivity object within the detection range. In specific implementation, the small light intensity can be minimum light intensity that the laser of the LiDAR can emit with.

As another example, as shown in Fig. 12, here, in the first sub-detection Loop0 and the second sub-detection Loop1, the detection signals emitted by the lasers of the channel A and the channel B working in parallel are all single-pulse signals. In specific implementation, a multi-pulse signal can be emitted, and at least one of following parameters of multi pulses can be coded and changed, such as the light-emitting time, the pulse width, and the pulse amplitude. Continuously with reference to Fig. 12, in the first sub-detection Loop0:
The lasers corresponding to the channel A and the channel B emit the light in parallel using the first light intensity, and the strength of the corresponding echo signals is detected on the detectors corresponding to the channel A and the channel B. As shown in Fig. 12, the strength of the echo signal detected by the channel A is greater than the first threshold Thr1 and less than a second threshold Thr2, while the echo signal detected by the channel B is greater than the second threshold Thr2.

Because the used first light intensity enables the detector to merely detect the echo signal from the high-reflectivity object with the strength greater than the predetermined first threshold Thr1, and the echo signal strength received by the channel A and the channel B are both greater than the first threshold Thr1, it is determined that the high-reflectivity object is encountered at the orientation of the channel B in the first sub-detection Loop0. However, it is not completely certain whether the high-reflectivity object exists at the orientation of the channel A, where misjudgment can occur. Because the echo signal received by the detector of the channel A can result from reflection of the detection signal emitted by the laser of the channel A after encountering the high-reflectivity object or can be the crosstalk caused by the echo signal of the channel B emitting the light in parallel to the channel A, which affects the detecting result of the channel A and thus affects the overall detection quality of the LiDAR.

To reduce the crosstalk between the parallel light-emitting channels and improve the overall detection quality of the LiDAR, in the second sub-detection Loop1:
The laser corresponding to the channel A can be controlled to emit the light using the second light intensity, and the laser corresponding to the channel B can be controlled not to emit the light (represented by blank in Fig. 12), and the second light intensity is greater than the first light intensity (the length of an arrow is configured to represent the strength of the optical signal in Fig. 12.)

Among them, for the channel B, the strength of the echo signal in the first sub-detection Loop0 in one detection is greater than the second threshold Thr2, it can be determined that there is the high-reflectivity object within the detection range of this channel, and the detection information at this orientation can be determined based on the detection process in the first sub-detection Loop0. Therefore, to avoid the crosstalk to the channel A emitting the light in parallel, the laser of the channel B can not emit the light during the second sub-detection Loop1 in one detection. However, for the channel A, the strength of the echo signal is between the first threshold Thr1 and the second threshold Thr2 in Loop0 in one detection, so it is difficult to determine whether the echo signal is interfered by the channel B emitting the light in parallel. In the second sub-detection Loop1, possible interference of the channel B to the channel A can be eliminated by controlling the laser of the channel B not to emit the light, and there is no need to worry about the interference of the channel A to the channel B. In this case, the laser of the channel A is controlled to emit the light using the second light intensity greater than the first light intensity, thereby realizing the detection of the object possibly existing in a farther range.

It can be seen from the above embodiments that through two sub-detection processes of the detection, on one hand, human eye safety can be improved and tentative detection of the object within the detection range can be realized, and on the other hand, the crosstalk between the parallel light-emitting channels can be reduced, thereby improving the overall detection quality of the LiDAR.

It can be understood that in specific implementation, in the first sub-detection Loop0, there can be that the strength of the echo signals received by the channel A and channel B are both greater than the second threshold Thr2, it represents that there is the high probability of pulses emitted by the channel A and the channel B encountering the high-reflectivity object. In such a case, the lasers corresponding to the channel A and the channel B can be controlled not to emit the light in the second sub-detection Loop1, thereby improving the overall detection efficiency. If the strength of the echo signals received by the channel A and the channel B is less than the first threshold Thr1 in the first sub-detection Loop0, it represents that there is the high probability of no existence of the high-reflectivity object within the detection range of the detector. In such a case, the corresponding laser can be controlled to emit the light using the third light intensity not less than the second light intensity in the second sub-detection Loop1 to normally detect the obstacle that can exist at the detection orientation.

It should be noted that for convenience of understanding, the above detection process is described by taking two channels of the LiDAR as an example. In specific implementation, the LiDAR can have more than two channels to emit the light in parallel to perform the detection, and the detection process can be referred to the above embodiments and cannot be described in detail again.

In other embodiments of this disclosure, the light-emitting strategy of the laser of the parallel light-emitting channel in the first sub-detection of the subsequent round can be changed based on the strength of the echo signal in the first sub-detection, for example, the emitted light intensity of the laser of the parallel light-emitting channel in the first sub-detection of subsequent rounds can be changed.

As an optional example, the emitted light intensity of the corresponding channel in a subsequent single round (i.e., a next detection) can be changed based on the strength of the echo signals of each group of channels in the first sub-detection in the current single detection. More specifically, the emitted light intensity of the laser of the parallel light-emitting channel in the first sub-detection of the subsequent round can be correspondingly changed based on the strength interval where the echo signal in the first sub-detection is located.

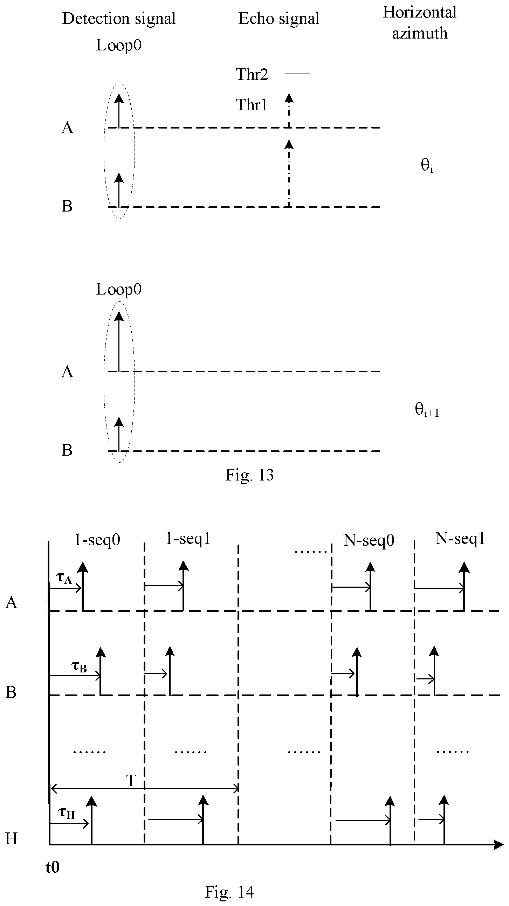

In specific application, with scanning of a scanning system of the LiDAR, the laser detects at different horizontal orientations. In this process, it is described in detail with reference to Fig. 13 to control the light-emitting strategy of the subsequent round.

With reference to a schematic diagram of a light emission and detection process of a channel corresponding to a LiDAR in another specific application scenario, provided in embodiments of this disclosure shown in Fig. 13, one detection can include at least two sub-detection processes, and Fig. 13 merely shows a process in the first sub-detection Loop0 in multiple detections.

As an example, as shown in Fig. 13, there are two consecutive detections, that is, a current round of detection and a next round of detection. For example, in the current round of detection, a horizontal azimuth is θᵢ, and in the next round of detection, a horizontal azimuth is θᵢ₊₁, where i is an integer greater than or equal to 1.

With reference to Fig. 13, in the first sub-detection Loop0 of the current round:
At an orientation of a horizontal azimuth θᵢ, the lasers corresponding to the channel A and the channel B emit the light in parallel using the first light intensity (basically the minimum light intensity that the LiDAR can emit with to improve the human eye safety and avoid excessive crosstalk after encountering the high-reflectivity object), and the corresponding echo signals are detected on the detectors corresponding to the channel A and the channel B. As shown in Fig. 13, the strength of the echo signal detected by the channel A is greater than the first threshold Thr1 and less than the second threshold Thr2, while the echo signal detected by the channel B is greater than the second threshold Thr2.

To reduce the crosstalk between the parallel light-emitting channels and improve the overall detection quality of the LiDAR, in the first sub-detection Loop0 of a next round of detection:
At a detection orientation of a horizontal azimuth θᵢ₊₁, the laser corresponding to the channel Ais controlled to emit the light using the second light intensity in the first sub-detection Loop0 based on the strength of the above echo signals received by the detectors in the first sub-detection Loop0 at the detection orientation of the horizontal azimuth θᵢ, which can realize normal detection of a possible obstacle within the detection range and improve the overall detection quality. Moreover, the laser corresponding to the channel B is controlled to emit the light using the fourth light intensity, and the fourth light intensity is smaller than the second light intensity (the length of the arrow is configured to represent the strength of the optical signal in Fig. 13), to cause that the detection of the high-reflectivity object within the detection range can be realized and the interference to other channels can be reduced.

It can be seen from the above that a strength value of the echo signal received by the laser of the parallel light-emitting channel in the first sub-detection can be in different strength intervals. For example, the strength value of the received echo signal can be greater than the first threshold and less than the second threshold, or greater than the second threshold, or can be less than the first threshold.

It can be understood that to adapt to a complex detection environment, in specific implementation, more thresholds can be determined to form a more accurately controlled threshold interval. Respective specific thresholds can be determined based on a specific application environment and performance needs of the LiDAR. For example, the first threshold can be a value slightly larger than ambient noise, and the second threshold is a value close to detector saturation.

In a specific application process, the emitted light intensity of the laser of the parallel light-emitting channel in the second sub-detection Loop1 and the emitted light intensity in the first sub-detection loop0 of the subsequent round can also be changed at the same time based on the echo signal in the first sub-detection Loop0. This cannot be further described herein.

In specific implementation, in addition to correspondingly changing the subsequent emitted light intensity of the laser of the parallel light-emitting channel based on the echo signal in the first sub-detection, the relative light-emitting time sequence of the laser of the parallel light-emitting channel in the at least one of the second sub-detection or the first sub-detection of the subsequent round can be correspondingly changed, to cause that interfering channels can be prevented from affecting other parallel light-emitting channels, thereby improving the overall detection quality of the LiDAR.

As a specific example, the laser of each channel can be controlled to emit the multi-pulse sequence or the single pulse sequence in both the first sub-detection and the second sub-detection. Alternatively, the multi-pulse sequence is emitted in the first sub-detection and the single pulse sequence is emitted in the second sub-detection. Alternatively, the single pulse sequence is emitted in the first sub-detection and the multi-pulse sequence is emitted in the second sub-detection. The embodiments of this disclosure do not limit a type of a pulse sequence emitted by the laser in the first sub-detection and the second sub-detection.

As described above, the LiDAR uses a parallel light-emitting method. In the first sub-detection of the single detection, the multiple channels emit the light in parallel, and correspondingly, the echoes determined in the first sub-detection of the single detection can overlap each other in time, and as such, if there is the interference signal, the interference signal can be misjudged as an effective point, thereby affecting the detection quality.

For the multiple channels working in parallel in the at least one of the second sub-detection or the first sub-detection of the subsequent round, to further improve anti-crosstalk performance, when the echoes determined in the first sub-detection of the single detection overlap each other in time, the pulse starting emission time of the lasers of the channels with the echoes overlapping in time is changed, to cause the pulse starting emission time of the channels with the echoes overlapping in time in the at least one of the second sub-detection or the first sub-detection of the subsequent predetermined round different to be different, and thus pulse light-receiving time of the multiple channels in the second sub-detection or the first sub-detection of the subsequent predetermined round is staggered, thereby reducing the crosstalk between parallel channels.

As a specific example, for the multiple channels working in parallel, different emission starting time can be determined for each channel. For example, the intervals between the emission starting time of the lasers of the respective channels are different by the fixed value or in the predetermined ratio, or the random time jitter τ is applied to each channel on the basis of the predetermined pulse starting emission time t0, and t0+τ is respectively taken as the actual pulse starting emission time of the lasers of the respective channels.

To make those skilled in the art understand and implement better, one optional example is given below to illustrate how to change.

With reference to a schematic diagram of a principle of changing pulse starting emission time of multiple channels shown in Fig. 14, the predetermined pulse starting emission time of the multiple channels A to H working in parallel is t0, and the corresponding random time jitter values for each channel are τ_{A} to τ_{H} in sequence. Because the time jitter values of different channels are random, which can be considered to be different from each other, the pulse starting emission time when the lasers of the multiple channels working in parallel emit the light is different, has randomness. However, on the contrary, the interference signal does not have this randomness. Therefore, the ToF values of the noise points are quite different and have no correlation even if the noise points are generated by the multiple channels, and then they can be determined as the isolated points.

The detection process is improved by changing the pulse starting emission time through the random jitter, which has the low power consumption and can effectively reduce the noise points.

Because each single detection includes two sub-detections, that is, the first sub-detection and the second sub-detection, the pulse starting emission time corresponding to the respective channels in the first sub-detection and the second sub-detection both can be changed.

Continuously with reference to Fig. 14, for the channels A to H emitting the light in parallel, for example, for the single detection starting from t0, in a first sub-detection 1-seq0 stage, the pulse starting emission time corresponding to the channels A to H changes and becomes t0+τ_{A} to t0+τ_{H} in sequence. Similarly, for the single detection starting from t0, in a second sub-detection 1-seq1 stage, the pulse starting emission time corresponding to the channels A to H can randomly change again, and the starting emission time in the first sub-detection N-seq0 and the second sub-detection N-seq1 in each detection process randomly changes, to cause the relative light-emitting time sequence of the lasers of the parallel light-emitting channels to do not overlap, and further the echoes of the parallel light-emitting channels to be no longer overlapped in time, thereby further reducing the crosstalk between the channels.

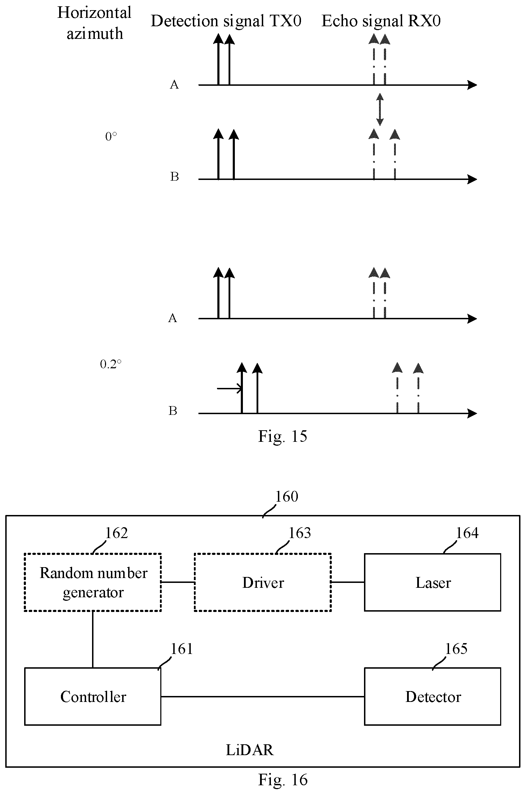

With reference to another schematic diagram of changing pulse starting emission time of multiple channels shown in Fig. 15, among them, a solid arrow represents a detection signal TX0 emitted by the laser, and a dotted arrow represents an echo signal RX0. Fig. 15 shows that in the first sub-detection Loop0 at an orientation of a horizontal azimuth 0°, the emission time of the channel A and the channel B is basically the same, and the echo signals overlap to some extent in time, thereby causing the echo interference. In view of this, in the following detection at a next horizontal orientation, for example, corresponding to an azimuth of 0.2°, relative pulse starting emission time of the lasers in the channel A and the channel B can be changed, for example, the random disturbance value τB is added to the pulse starting emission time of the laser of the channel B, to cause that it is staggered from the pulse starting emission time of the laser of the channel A, and correspondingly, the receiving time of the echo signals of the two channels can be separated with the high probability, thereby avoiding the mutual interference between different parallel light-emitting channels.

It can be understood that the above is merely example illustration. In specific implementation, the feedback and the change based on the angles are not limited to the first sub-detection of different detection rounds. In specific implementation, the pulse starting emission time of the lasers of the respective channels in the at least one of the first sub-detection or the second sub-detection at a subsequent orientation (corresponding to the subsequent round of the detection, e.g., the next round of the detection at the next horizontal angle) can be changed based on the feedback relationship of the echo signals of the respective channels in the at least one of the first sub-detection or the second sub-detection in a current horizontal orientation (corresponding to the current detection.)

In specific implementation, to generate the random jitter value as needed in the detection process, a random number generator can be built in the LiDAR. With reference to a structural schematic diagram of a LiDAR shown in Fig. 16, a LiDAR 160 includes a controller 161, a random number generator 162, and drivers 163, lasers 164, and detectors 165 corresponding to the respective channels. The working principle can be described in detail with reference to Fig. 16 in the following.

The controller 161 can control the random number generator 162 to start to work, generate the random disturbance values of the respective channels for the multiple channels working in parallel, and then output them to the drivers 163 and feed back to the controller 161, when it is determined that the features (e.g., at least one of the corresponding ToF values or positions) of the interference points of the multiple channels working in parallel have the high correlation based on the detecting result in the first sub-detection in the current detection.

The drivers 163 corresponding to the respective channels respectively perform the superimposing based on the predetermined pulse starting time and the random disturbance values of the respective channels to determine the actual pulse starting time corresponding to the respective channels, and drive the lasers 164 of the respective channels to emit the light at the actual pulse starting time.

The detectors 165 corresponding to the respective channels perform the echo detection for the single detection to determine the detecting result and transmit it to the controller 161.

Further, the controller 161 can determine the more accurate ToF value by subtracting the corresponding pulse starting emission time from the receiving time of the echo signal based on the detecting result returned by the detectors of the respective channels.

In specific implementation, the random number generator 162 can be realized in the hardware or by the software algorithm, for example, by the hash algorithm, or by a combination of the software algorithm and hardware circuit. The embodiments of this disclosure do not make any limitation on used specific software algorithm, a hardware circuit structure and other implementation forms.

As described above, for the LiDAR with the multiple channels, the channels can be grouped in detecting. In the single detection, it can also be realized in different ways to control the lasers of different groups to detect based on a predetermined grouping time sequence. Some examples that can be implemented are given below, and it can be understood that the following examples are not intended to limit the protection scope of this disclosure.

In an embodiment of this disclosure, in the single detection, all channels are controlled to perform the first sub-detection in sequence based on the predetermined grouping time sequence, and then perform the second sub-detection by group, that is, after the detection in the first sub-detection of all channels is completed, all channels are controlled to complete the detection in the second sub-detection based on the predetermined light-emitting time sequence.

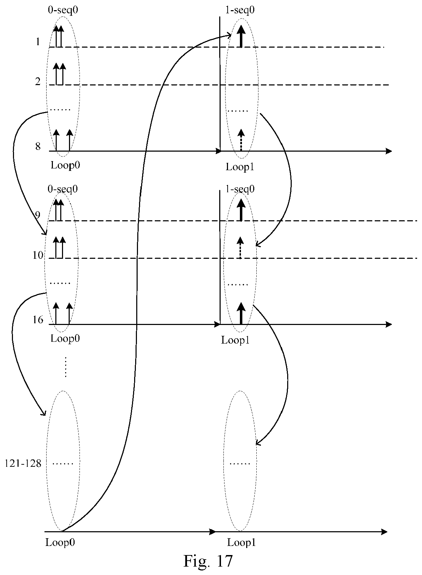

Fig. 17 shows a schematic diagram of a detection principle for a LiDAR in a specific application scenario, provided in embodiments of this disclosure. As shown in Fig. 17, taking a 128-line LiDAR as an example, it is divided into multiple groups and emits the light in sequence by round. In each round, the multiple lasers detect in parallel as a group, and the corresponding detectors are used to detect the object within the detection range. Each single detection includes the two sub-detection actions, that is, Loop0 and Loop1. As one optional example, the 128 channels are divided into 16 groups, and a group of lasers of eight channels are controlled to work in parallel each time, and the corresponding eight detectors in this group receive the echo signals within the predetermined time window. After the time window passes, the lasers of eight channels in another group work in parallel and the corresponding eight detectors in another group receive the echo signals, ..., and so on, and as such, the detection in the first sub-detection Loop0 of the respective channels is completed in sequence, and corresponding first echo signal strength is determined. After all channels complete the detection in Loop0, the light-emitting strategy of the corresponding channel in the second sub-detection Loop1 is changed based on the first echo signal strength in the first sub-detection Loop0, and respective channel groups perform the detection in Loop1 in sequence to determine corresponding second echo signal strength.

Among them, in the first sub-detection Loop0, to avoid the crosstalk caused by the high-reflectivity object, the lasers of the multiple channels working in parallel can be controlled to emit the light using the first light intensity with the small value, and the first light intensity enables the detector to merely detect the echo signal from the high-reflectivity object with the strength greater than the predetermined first threshold. In other words, for the non-high reflectivity (which can be abbreviated as non-high reflection) object, if the laser emits with the first light intensity, the corresponding detector can not receive the echo with the enough intensity that exceeds the threshold. In specific implementation, the first light intensity can be determined based on the expected distance measurement capability of the LiDAR, the echo energy of the high-reflectivity object, and the response threshold of the corresponding detector, to cause that the detector can merely receive the echo signal from the high-reflectivity object within the detection range.

As another example, as shown in Fig. 17, here, in the first sub-detection Loop0, the multiple channels working in parallel all emit the dual pulses, and to avoid the interference between the channels to other LiDARs, the dual pulses of the lasers of the respective channels are independently encoded using different time intervals between pulses.

With reference to Fig. 17, in the first sub-detection Loop0:
Firstly, the channels 1 to 8 work in parallel, the lasers of the respective channels emit first pulses in parallel, and respectively emit respective second pulses based on the predetermined time interval between the pulses, and the detectors of the channels 1 to 8 receive the signals in the predetermined time window. After the time window passes, the channels 9 to 16 work in parallel, the lasers of the respective channels emit the first pulses in parallel, and respectively emit the respective second pulses based on the predetermined time interval between the pulses, and the detectors of the channels 9 to 16 respectively receive the signals in the predetermined time window, ..., and operations are made in sequence in this way up to channels 121 to 128, and the light emission and the detection are performed for the multiple channels working in parallel by group, to cause that first echo signal strength corresponding to channels 1 to 128 in the first sub-detection Loop0 to be determined.

In the first sub-detection Loop0, the multiple channels working in parallel emit the light using the low light intensity. Therefore, even the echo from the high-reflectivity object typically does not saturate the detector, the echoes of other channels working in parallel can be prevented from being seriously distorted, to cause that the respective channels can identify the signals by decoding.

Continuously with reference to Fig. 17, in the second sub-detection Loop1:
Based on the first echo signal strength corresponding to the first sub-detection Loop0, the light-emitting strategy of the corresponding channel in the second sub-detection Loop1 is changed, and a similar time sequence is used to cause the multiple channels working in parallel to emit the light in sequence in the second sub-detection Loop1, and corresponding second echo signal strength is determined through the detection of the corresponding echo signal by the detector.

In specific implementation, in the second sub-detection Loop1, the changed light-emitting strategy can be determined based on a strength threshold interval where the echo signal in the first sub-detection Loop0 is located, and the lasers corresponding to the respective channels can be controlled to emit the light. For a channel receiving with the first echo signal strength not less than the predetermined second threshold, the following two optional solution are shown combined with Fig. 17.
1) In the second sub-detection Loop1, the corresponding laser is controlled not to emit the light.
   With reference to Fig. 17, if in a certain detection, it is determined that the detector detects that there is the echo signal in the channel 2 with the strength not less than the second threshold in the first sub-detection Loop0 based on the first echo signal strength in the first sub-detection Loop0, then in the second sub-detection Loop1, the channel 2 does not emit any pulse (represented by blank in Fig. 17), to cause that the strong optical signal emitted by the laser in this channel can be prevented from being reflected by the high-reflectivity object and causing the signal crosstalk generated by other channels working in parallel.
2) In the second sub-detection Loop1, corresponding light intensity is controlled to be the fourth light intensity, and the fourth light intensity is smaller than the second light intensity and larger than the first light intensity.

As shown in Fig. 17, if in a certain detection, it is determined that there are high-reflectivity objects in the channel 8 in the first group and the channel 10 in the second group in the first sub-detection Loop0 based on the first echo signal strength in the first sub-detection Loop0, then the lasers of the channels 1 to 7 in the first group of the channels (i.e., the channels 1 to 8) working in parallel are firstly controlled to emit the light using the third light intensity (the single thick solid arrow in Fig. 17 is configured to represent that the laser thereof emits the single laser pulse, with the light intensity greater than the second light intensity) and the laser of channel 8 is controlled to work using the fourth light intensity (the dotted arrow in Fig. 17 is configured to represent that the light intensity thereof is lower than the second light intensity) in the light-emitting time sequence in the second sub-detection Loop1. Then, the lasers of the channel 9 and the channels 11 to 16 in the second group of channels (the channels 9 to 16) working in parallel are controlled to emit the light using the third light intensity (the single thick solid arrow in Fig. 17 is configured to represent that the laser thereof emits the single laser pulse, with the light intensity greater than the second light intensity), and the laser of the channel 10 is controlled to emit the light using the fourth light intensity (the dotted arrow in Fig. 17 is configured to represent that the light intensity thereof is lower than the second light intensity.)

For sake of simplicity in the above, two solutions of changing the light-emitting strategy in the second sub-detection are described combined with the same figure. In specific implementation, the two solutions can also be implemented in combination. For example, if it is determined that there are high-reflectivity objects in the channel 2, the channel 8, and the channel 10 based on the first echo signal strength in the first sub-detection Loop0, then in one specific embodiment, for the channels 1 to 8 working in parallel, the laser of the channel 2 can be controlled not to emit the light, while the laser of the channel 8 can be controlled to emit the light using the fourth light intensity, and the lasers of the channel 1 and the channels 3 to 7 can emit the light using the third light intensity in the predetermined light emitting time sequence in the second sub-detection Loop1. Then, for the channels 9 to 16 working in parallel, the lasers of the channel 9 and the channels 11 to 16 are controlled to emit the light using the third light intensity, and the laser of the channel 10 is controlled to emit the light using the fourth light intensity.

Similarly, for the channel with the echo signal with the strength greater than the first threshold and less than the second threshold, the laser of the channel can be controlled to emit the light using the second light intensity in the second sub-detection Loop1, and the second light intensity is different from the first light intensity. For the channel with no echo signal with the strength less than the first threshold within the detection range, the laser of the channel is controlled to emit the light using the third light intensity in the second sub-detection Loop1, and the third light intensity is not less than the second light intensity. This cannot be described in detail again herein.

In the above solution, the detection in the second sub-detection Loop1 is started after the detection in the first sub-detection Loop0 of all channels is finished. In a specific application process, there can be the long duration in the first sub-detection Loop0. When the same channel detects in the second sub-detection Loop1, it has already turned a certain angle with respect to the first sub-detection Loop0 stage. Therefore, there can be the angular deviation in the field of view between the two detections.

To further improve efficiency and accuracy of the detection, for any single detection of all channels, channels of a predetermined group are controlled to continuously perform the first sub-detection and the second sub-detection in sequence based on the predetermined grouping time sequence. More specifically, for any single detection of all channels, the lasers of one or more groups of channels can be controlled to emit the light by group in sequence based on the first sub-detection and the second sub-detection. That is to say, for the single detection of all channels, after one or more groups of channels complete their own first sub-detection and second sub-detection, the first sub-detection and the second sub-detection of the next one or more groups of channels can be performed, until the first sub-detection and the second sub-detection of all channels are completed.

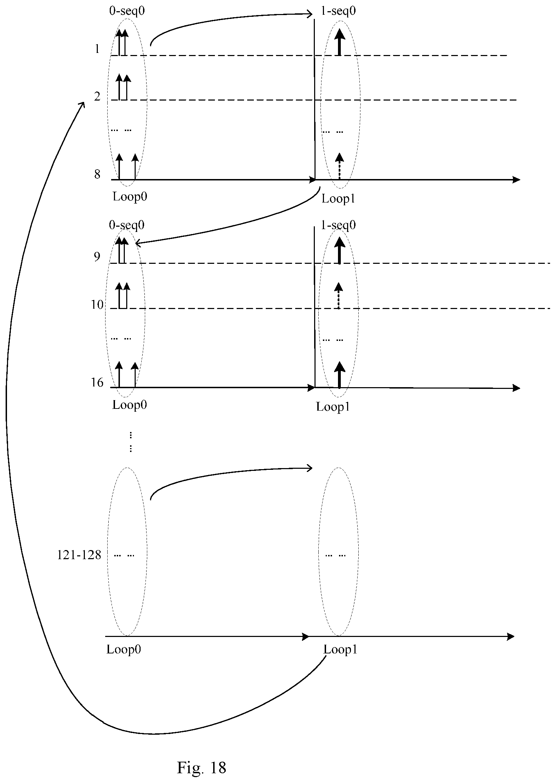

With reference to a schematic diagram of a detection principle for a LiDAR in a specific application scenario, provided in embodiments of this disclosure shown in Fig. 18, the detection principle of the LiDAR is different from that of the LiDAR in Fig. 17 in that for all of the channels, after the first sub-detection and the second sub-detection of the respective channels in the respective groups are performed, the single detection of other groups is performed based on the predetermined grouping time sequence.

Specifically, with reference to Fig. 18, it is assumed that the channels 1 to 8 in the first group emit the light in parallel, and the respective channels emit the first pulses in parallel in the first sub-detection Loop0, and respectively emit the respective second pulses based on the predetermined time interval between the pulses, and the detectors of the channels 1 to 8 receive first echo signals in the predetermined time window, and then emit third pulses in parallel in the second sub-detection Loop1, and the detectors of the channels 1 to 8 receive second echo signals in the predetermined time window. After the time window in the second sub-detection passes, the channels 9 to 16 of the second group work in parallel, and the respective channels emit the first pulses in parallel in the first sub-detection Loop0, and emit the respective second pulses based on the predetermined time interval between the pulses, and then emit the third pulses in parallel in the second sub-detection Loop1; and the detectors of the channels 9 to 16 respectively receive the second echo signals in the predetermined time window, ..., and so on, until the channels 121 to 128 in the sixteenth group respectively receive the second echo signals in the predetermined time window, to cause that the first echo signal strength of the respective channels in the respective groups in the first sub-detection Loop0 and the corresponding second echo signal strength in the second sub-detection Loop1 can be determined.

In specific implementation, in the second sub-detection Loop1, for the channel with no second echo signal with the strength greater than the predetermined first threshold, the laser corresponding to the channel can be controlled to emit the light using the second light intensity meeting the normal ranging capability of the LiDAR. As one specific example, the predetermined measurement distance of the LiDAR is 150 m, and the second light intensity can be determined to meet the needs that the detector can receive the echo signal from the object with the reflectivity of 10% at 150 m.

In specific implementation, the changed light-emitting strategy can be determined based on the strength threshold interval where the echo signal in the first sub-detection Loop0 is located, and the corresponding laser is controlled to emit the light.

As an optional example, for the channel receiving the echo signal with the strength not less than the predetermined second threshold, the following two optional solutions are shown combined with Fig. 18.
1) In the second sub-detection Loop1, the corresponding laser is controlled not to emit the light.
   With reference to Fig. 18, if in a certain single detection, it is determined that the detector detects that there is the high-reflectivity object in the channel 2 in the first sub-detection Loop0 based on the first echo signal strength in the first sub-detection Loop0 for the single detection of the channels 1 to 8, then in the second sub-detection Loop1, the channel 2 does not emit any pulse (represented by blank in Fig. 18), to cause that the strong optical signal emitted by the laser in this channel can be prevented from being reflected by the high-reflectivity object and causing the signal crosstalk generated by other channels working in parallel.
2) In the second sub-detection Loop1, the corresponding light intensity is controlled to be the fourth light intensity, and the fourth light intensity is smaller than the second light intensity.

As shown in Fig. 18, if in a certain detection, it is determined that there are high-reflectivity objects in the channel 2 and the channel 8 in the first sub-detection Loop0 based on the first echo signal strength in the first sub-detection Loop0 for the single detection of the channels 1 to 8, then the lasers of the channel 1, and the channels 3 to 7 of the channels 1 to 8 working in parallel are firstly controlled to emit the light using the third light intensity (the single thick solid arrow in Fig. 18 is configured to represent that the laser thereof emits the single laser pulse, with the light intensity greater than the second light intensity), the laser of the channel 8 is controlled to emit the light using the fourth light intensity (the dotted arrow in Fig. 18 is configured to represent the light intensity thereof is lower than the second light intensity), and the laser of the channel 2 is controlled not to emit the light (represented by blank in Fig. 18) in the light-emitting time sequence in the second sub-detection Loop1.

During the single detection of the channels 9 to 16, it is determined that there is the high-reflectivity object in the channel 10 in the first sub-detection Loop0 based on the first echo signal strength in the first sub-detection Loop0, and the lasers of the channel 9, and the channels 11-16 of the channels 9-16 working in parallel are controlled to emit the light using the third light intensity (the single thick solid arrow in Fig. 18 is configured to represent that the laser thereof emits the single laser pulse, with the light intensity greater than the second light intensity) and the laser of the channel 10 is controlled to work using the fourth light intensity (the dotted arrow in Fig. 18 is configured to represent that the light intensity thereof is lower than the second light intensity.)

Similarly, for the channel with the echo signal with the strength greater than the first threshold and less than the second threshold, the laser of the channel can be controlled to emit the light using the second light intensity in the second sub-detection Loop1, and the second light intensity is different from the first light intensity. For the channel with no echo signal with the strength less than the first threshold within the detection range, the laser of the channel is controlled to emit the light using the third light intensity in the second sub-detection Loop1, and the third light intensity is not less than the second light intensity. This cannot be described in detail again herein.

In specific implementation, the echo signal of the at least one of the first sub-detection or the second sub-detection can be determined based on the above detection method, and the detecting result for the single detection can be determined based on the echo signal of the at least one of the first sub-detection or the second sub-detection.

Specifically, the detecting result within the detection range for the single detection can be determined merely based on the echo signal in the first sub-detection, or the detecting result within the detection range for the single detection can be determined merely based on the echo signal in the second sub-detection, or the detecting result within the detection range for the single detection can be determined based on the echo signal in the first sub-detection and the echo signal in the second sub-detection.

A specific solution used can be determined based on a specific condition of the echo signal in the first sub-detection and the light-emitting strategy in the second sub-detection. In addition, different channels can use different methods for multiple channels working in parallel. Example illustration is made in the following combined with some specific application scenarios.

In some examples of this disclosure, for the channel with no echo signal with the strength greater than the first threshold within the detection range, the detecting result within the detection range can be determined merely based on the echo signal in the second sub-detection, for example, the echo signal in the second sub-detection can be directly taken as the detecting result within the detection range for the single detection. However, for the channel with the echo signal with the strength greater than the first threshold within the detection range, different processing methods can be used based on the light-emitting strategy of the laser of the channel in the second sub-detection. Specifically, the following examples can be used.

If for the channel with the echo signal with the strength not less than the second threshold within the detection range, the laser corresponding to the channel is controlled not to emit the light, the detecting result within the detection range can be determined merely based on the echo signal in the first sub-detection.

If for the channel with the echo signal with the strength not less than the second threshold within the detection range, the light intensity of the laser corresponding to the channel is controlled to be the fourth light intensity, the detecting result of the channel with the echo signal with the strength not less than the second threshold within the detection range can be determined merely based on the echo signal in the second sub-detection, or also can be determined based on the echo signal in the first sub-detection and the echo signal in the second sub-detection.

As another example, for the channel with the echo signal with the strength greater than the first threshold and less than the second threshold, the detecting result of the corresponding channel within the detection range can be determined merely based on the echo signal in the second sub-detection, or can be determined based on the echo signal in the first sub-detection and the echo signal in the second sub-detection.

In specific implementation, if the detecting result within the detection range is determined based on the echo signal in the first sub-detection and the echo signal in the second sub-detection, as an alternative manner, the echo signal in the first sub-detection and the echo signal in the second sub-detection can be directly superimposed as the detection data of the respective corresponding channels, and the detecting result within the detection range can be determined based on the detection data of the respective corresponding channels. In this way, the sampling process merely needs to be performed once on the echo signal determined by the first sub-detection and the echo signal determined by the second sub-detection after the superposition, which can simplify the system operation processing procedure.

It can be understood that the above specific examples are not intended to limit specific implementation of the detecting result. In a specific application process, the following specific example methods can be expanded, modified or optimized based on specific situations, or the other echo signals in the first sub-detection and the second sub-detection based on the single detection can be used to determine the detecting result within the detection range in a detection cycle.

In specific implementation, if the single pulse detection is used in the detection process, such as in the at least one of the first sub-detection Loop0 or the second sub-detection Loop1, anti-interference capability thereof is weak, which can result in the noise points in the generated point cloud. Therefore, some methods can be used to filter the noise points in the point cloud.

The following shows a specific implementation example of a neighborhood noise filtering method. It can be understood that a specific noise point filtering method is not limited in the embodiments of this disclosure.

For example, for detection points in point cloud data generated by the second sub-detection, the detection points of any channel in the second detection data can be taken as points to be determined, and correlation between the points to be determined and neighboring detection points thereof can be determined, and the detection points that do not meet a correlation threshold can be removed from the detecting result.

Embodiments of this disclosure further provide a LiDAR that can realize the above detection method. To make those skilled in the art better understand and implement, corresponding introduction can be made in the following combined with the drawings.

In the embodiments of this disclosure, the LiDAR can include a controller, multiple lasers and multiple detectors, and the multiple lasers and the multiple detectors forming multiple channels, where
the lasers emit optical signals, the detectors receive echo signals reflected by obstacles, and a laser and a detector in a same channel at least partially overlap in a field of view;
a controller configured to control all channels to perform detection by group, including: controlling lasers of each group to emit the light in parallel, a single detection of each channel including: a first sub-detection and a second sub-detection; and correspondingly changing a light-emitting strategy of a laser of a parallel light-emitting channel in at least one of the second sub-detection or a first sub-detection of a subsequent round based on an echo signal in the first sub-detection.

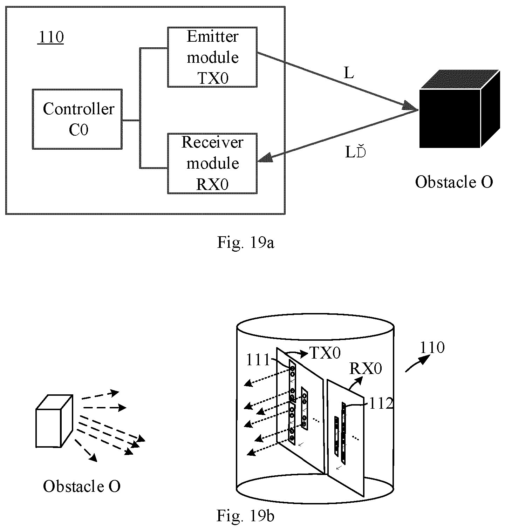

In some embodiments of this disclosure, firstly, as shown in Fig. 19a, a LiDAR 110 includes: an emitter module TX0 including multiple lasers 111, configured to an emit optical signal L;
a receiver module RX0 including multiple detectors 112, configured to receive an echo signal L' reflected by an obstacle from a received optical signal, where at least one laser and at least one detector form a detection channel, all of the multiple lasers and the multiple detectors form multiple detection channels, and the laser and the detector in a same detection channel overlap at least partially in a field of view; and
a controller C0 configured to control all channels to perform detection by group, including: controlling lasers of each group to emit light in parallel, where a single detection of each channel includes: a first sub-detection and a second sub-detection; and correspondingly changing a light-emitting strategy of a laser of a parallel light-emitting channel in at least one of the second sub-detection or a first sub-detection of a subsequent round based on an echo signal in the first sub-detection, and point cloud data can be generated based on the echo signal of each detection channel.

Next, with reference to Fig. 19b, as an optional example, multiple lasers 111 in the emitter module TX0 can be arranged in multiple columns, all of which are attached to a flat panel, specifically, the lasers can be vertical cavity surface emitting lasers ("VCSELs"). As shown in Fig. 19b, light emitted by the lasers 111 is emitted perpendicular to the flat panel. After being shaped by an emitting lens group (not shown), it is emitted from the LiDAR 110 to different directions to cover a vertical field of view ("FOV") of the LiDAR.

As an optional example, one or more detector units 112 in the receiver module RX0, specifically SPAD or SiPM, can also be all attached to the flat plate and arranged in multiple columns corresponding to arrangement of the lasers 111 to form multiple detection channels with the lasers 111 in the emitter module TX0.

Among them, each detection channel can include one laser and one or more detectors, or it can be composed of one or more lasers and one detector. The laser and the detector of each detection channel have a same vertical sub-FOV, that is, after the optical signals emitted by the lasers in the same detection channel are reflected by the obstacles and return to the LiDAR, they can be received by the detectors in the same detection channel. Sub-fields of view of all detection channels together form scanning of the whole LiDAR in a vertical FOV, and the whole LiDAR can be driven by a motor and other devices to rotate as a whole, or the light emitted by the lasers can be deflected by a micro-motion device such as a rotating mirror, a micro electromechanical system (MEMS), and a liquid crystal to further realize the scanning of the LiDAR in a horizontal FOV, thereby forming a scanning point cloud map with a certain horizontal FOV and vertical FOV.

For the detector located in the detection channel, it can start to work under control of the controller to receive the echo signal generated when the optical signal emitted from the corresponding laser in the detection channel is reflected by an external obstacle and returns to the LiDAR.

For the detector in the detection channel, it can always be in a state of receiving the optical signal under control of the controller, and then the signal received merely within a flight window of the detection channel where the detector is located is read out as the echo signal and further processed to generate the point cloud data.

As one optional example, the controller is configured to correspondingly change the emitted light intensity of the laser of the parallel light-emitting channel in the second sub-detection or the first sub-detection of the subsequent round based on the strength of the echo signal in the first sub-detection.

Specifically, the controller can be the single chip microcomputer, or any chip, apparatus or device with the data processing capability such as the field programmable gate array ("FPGA"), the single-core or multi-core processor, and the specific hardware structure thereof is not limited in the embodiments of this disclosure.

For other specific implementations of the LiDAR, reference can be made to the specific embodiments of the detection method for the LiDAR described above, which cannot be repeatedly described herein.

Embodiments of this disclosure further provide a computer-readable storage medium with computer instructions stored thereon, where when the computer instructions are executed, steps of the method described in any one of the above embodiments of this disclosure are executed. The instructions stored on the computer-readable storage medium execute the method described in any of the above embodiments, which can be specifically referred to the above embodiments and cannot be described in detail again.

The computer-readable storage medium can include, for example, any suitable type of memory unit, memory device, memory item, memory medium, storage device, storage item, storage medium and/or storage unit, such as a memory, a removable or non-removable media, an erasable or non-erasable media, a writable or rewritable media, a digital or analog media, a hard disk, a floppy disk, a compact disc read-only memory ("CD-ROM"), a recordable compact disc ("CD-R"), a CD rewritable ("CD-RW") disc, a magnetic media, a magneto-optical media, a removable memory card or disk, and various types of digital versatile disks ("DVDs"), magnetic tapes, cassette tapes, or the like.

The computer instructions can include any suitable type of code, such as source code, compiled code, interpreted code, executable code, static code, dynamic code, encrypted code, or the like, implemented using any suitable high-level, low-level, object-oriented, visual, compiled and/or interpreted programming language.

Although the embodiments of this disclosure are disclosed as above, this disclosure is not limited thereto. Any person skilled in the art can make various changes and modifications without departing from the spirit and scope of this disclosure. Therefore, the protection scope of this disclosure should be subject to the scope defined by the claims.

## Claims

1. A detection method for a LiDAR, wherein the LiDAR comprises a plurality of lasers and a plurality of detectors to form a plurality of channels, and the detection method comprises:
performing detection by group based on a predetermined detection time sequence for all channels in a single detection round, wherein the detection is performed in parallel for each group of channels, and one single detection of each channel comprises a first sub-detection and a second sub-detection, and for a plurality of parallel detecting channels:
controlling lasers corresponding to the plurality of parallel detecting channels to emit light using a first light intensity in the first sub-detection, and determining first detection data through the detection by detectors corresponding to the plurality of parallel detecting channels, wherein the first light intensity is configured to enable the corresponding detectors to merely receive echoes from high-reflectivity objects with reflectivity greater than a predetermined first reflectivity threshold;
changing a light-emitting strategy of the lasers of the plurality of channels based on the first detection data in the second sub-detection, and determining second detection data through the detection by the detectors corresponding to the plurality of parallel detecting channels; and
determining a detecting result of the plurality of channels for a single detection based on at least one of the first detection data or the second detection data.

2. The detection method for the LiDAR of claim 1, wherein changing the light-emitting strategy of the lasers of the plurality of channels based on the first detecting result in the second sub-detection comprises:
determining whether a high-reflectivity object with the reflectivity greater than the first reflectivity threshold exists within a detection range of the plurality of channels based on the first detection data in the second sub-detection;
controlling, for a channel with no high-reflectivity object within the detection range, a laser corresponding to the channel to emit the light using a second light intensity, wherein the second light intensity is greater than the first light intensity; and controlling, for a channel with the high-reflectivity object within the detection range, light intensity of a laser corresponding to the channel to be less than the second light intensity.

3. The detection method for the LiDAR of claim 2, wherein determining whether the high-reflectivity object with the reflectivity greater than the first reflectivity threshold exists within the detection range of the plurality of channels based on the first detection data in the second sub-detection comprises:
collecting a characteristic value of the first detection data; and
determining whether the characteristic value of the first detection data exceeds a predetermined first detection threshold to determine whether the high-reflectivity object with the reflectivity greater than the predetermined first reflectivity exists within the detection range of the plurality of channels.

4. The detection method for the LiDAR of claim 2, wherein controlling, for the channel with the high-reflectivity object within the detection range, the light intensity of the laser corresponding to the channel to be less than the second light intensity comprises at least one of:
controlling, for the channel with the high-reflectivity object within the detection range, the laser corresponding to the channel not to emit the light; or
controlling, for the channel with the high-reflectivity object within the detection range, the light intensity of the laser corresponding to the channel to be a third light intensity, wherein the third light intensity is smaller than the second light intensity.

5. The detection method for the LiDAR of claim 4, wherein the third light intensity does not exceed the first light intensity.

6. The detection method for the LiDAR of claim 4, wherein determining the detecting result of the plurality of channels for the single detection based on the at least one of the first detection data or the second detection data comprises:
determining the detecting result of the plurality of channels for the single detection based on the first detection data, in controlling, for the channel with the high-reflectivity object within the detection range, the laser corresponding to the channel not to emit the light; and
determining the detecting result of the plurality of channels for the single detection based on the second detection data or based on the first detection data and the second detection data, in controlling, for the channel with the high-reflectivity object within the detection range, the light intensity of the laser corresponding to the channel to be the third light intensity.

7. The detection method for the LiDAR of claim 6, wherein determining the detecting result of the plurality of channels for the single detection based on the first detection data and the second detection data comprises:
superposing an echo signal in the first sub-detection and an echo signal in the second sub-detection as detection data of respective corresponding channels; and
determining a detecting result of the respective corresponding channels for the single detection based on the detection data of the respective corresponding channels.

8. The detection method for the LiDAR of claim 2, wherein controlling, for the channel with no high-reflectivity object within the detection range, the laser corresponding to the channel to emit the light using the second light intensity comprises:
controlling, for the channel with no high-reflectivity object within the detection range, the laser corresponding to the channel to emit a single laser pulse or a multi-pulse sequence.

9. The detection method for the LiDAR of claim 1, wherein controlling the laser corresponding to the channel to emit the light using the first light intensity in the first sub-detection further comprises:
controlling the lasers of the plurality of channels to emit the single laser pulse or the multi-pulse sequence.

10. The detection method for the LiDAR of claim 8 or 9, wherein the single laser pulse or the multi-pulse sequence emitted by lasers of different channels in the plurality of channels has different encoding information, and the encoding information comprises at least one of the number of pulses, pulse starting emission time, a time interval between multi pulses, a pulse intensity ratio, or a pulse width ratio.

11. The detection method for the LiDAR of claim 10, further comprising:
changing the encoding information of the plurality of channels in a current detection round based on a detecting result of the plurality of parallel detecting channels in a previous detection round.

12. The detection method for the LiDAR of claim 11, wherein changing the encoding information of the plurality of channels in the current detection round based on the detecting result of the plurality of parallel detecting channels in the previous detection round comprises:
changing the pulse starting emission time of lasers of channels with echoes overlapping in time when the echoes determined by the first sub-detection at a previous horizontal azimuth overlap each other in time for the plurality of parallel detecting channels, to cause the pulse starting emission time of the plurality of channels with the echoes overlapping in time in the current detection round to be different.

13. The detection method for the LiDAR of claim 1, wherein performing the detection by group based on the predetermined detection time sequence for all channels in the single detection round comprises:
controlling lasers of all channels to emit the light in sequence based on the first sub-detection and the second sub-detection of all channels in the single detection round.

14. The detection method for the LiDAR of claim 1, wherein performing the detection by group based on the predetermined detection time sequence for all channels in the single detection round comprises:
controlling lasers of one or more groups of channels to emit the light by group in sequence based on the first sub-detection and the second sub-detection in the single detection round.

15. A detection method for a LiDAR, wherein the LiDAR comprises a plurality of lasers and a plurality of detectors to form a plurality of channels, and the detection method comprises:
performing detection by group for all channels;
wherein the detection comprises: emitting, by a laser, an optical signal, receiving, by a detector, an echo signal reflected by an obstacle, and determining detection information on the obstacle based on the echo signal;
emitting, by each group of lasers, light in parallel;
a single detection of each channel comprising a first sub-detection and a second sub-detection; and
correspondingly changing a light-emitting strategy of a laser of a parallel light-emitting channel in at least one of the second sub-detection or a first sub-detection of a subsequent round based on an echo signal in the first sub-detection.

16. The detection method for the LiDAR of claim 15, wherein correspondingly changing the light-emitting strategy of the laser of the parallel light-emitting channel in the at least one of the second sub-detection or the first sub-detection of the subsequent round based on the echo signal in the first sub-detection comprises:
correspondingly changing emitted light intensity of the laser of the parallel light-emitting channel in the at least one of the second sub-detection or the first sub-detection of the subsequent round based on strength of the echo signal in the first sub-detection.

17. The detection method for the LiDAR of claim 16, wherein the emitted light intensity of the laser of the parallel light-emitting channel in the first sub-detection is a first light intensity, and the first light intensity enables the detector to merely detect an echo signal from a high-reflectivity object with strength greater than a predetermined first threshold.

18. The detection method for the LiDAR of claim 17, wherein correspondingly changing the emitted light intensity of the laser of the parallel light-emitting channel in the at least one of the second sub-detection or the first sub-detection of the subsequent round based on the strength of the echo signal in the first sub-detection comprises:
controlling, for a channel with an echo signal with the strength greater than the first threshold and less than a second threshold, a laser of the channel to emit light using a second light intensity in the at least one of the second sub-detection or the first sub-detection of the subsequent round, wherein the second light intensity is different from the first light intensity.

19. The detection method for the LiDAR of claim 18, wherein correspondingly changing the emitted light intensity of the laser of the parallel light-emitting channel in the at least one of the second sub-detection or the first sub-detection of the subsequent round based on the strength of the echo signal in the first sub-detection further comprises at least one of
controlling, for a channel with no echo signal with the strength greater than the first threshold within a detection range, a laser of the channel to emit the light using a third light intensity in the at least one of the second sub-detection or the first sub-detection of the subsequent round, wherein the third light intensity is not less than the second light intensity; or
controlling, for a channel with an echo signal with the strength not less than the second threshold within the detection range, a laser of the channel not to emit the light in the second sub-detection, or the laser of the channel to emit the light using a fourth light intensity in the at least one of the second sub-detection or the subsequent round, wherein the fourth light intensity is less than the second light intensity and greater than the first light intensity.

20. The detection method for the LiDAR of claim 15, wherein correspondingly changing the light-emitting strategy of the laser of the parallel light-emitting channel in the at least one of the second sub-detection or the first sub-detection of the subsequent round based on the echo signal in the first sub-detection comprises:
correspondingly changing a relative light-emitting time sequence of the laser of the parallel light-emitting channel in the at least one of the second sub-detection or the first sub-detection of the subsequent round based on a strength interval where the echo signal in the first sub-detection is located.

21. The detection method for the LiDAR of claim 20, further comprising:
controlling a laser of each channel to emit a single laser pulse or a multi-pulse sequence in at least one of the first sub-detection or the second sub-detection.

22. The detection method for the LiDAR of claim 21, wherein correspondingly changing the relative light-emitting time sequence of the laser of the parallel light-emitting channel in the at least one of the second sub-detection or the first sub-detection of the subsequent round based on the strength interval where the echo signal in the first sub-detection is located comprises:
changing pulse starting emission time of lasers of channels with echoes overlapping in time when the echoes determined in the first sub-detection of a single detection overlap each other in time, to cause the pulse starting emission time of the channels with the echoes overlapping in time in the at least one of the second sub-detection or the first sub-detection of a subsequent predetermined round to be different.

23. The detection method for the LiDAR of claim 22, wherein changing the pulse starting emission time of the lasers of the channels with the echoes overlapping in time when the echoes determined in the first sub-detection of the single detection overlap each other in time, to cause the pulse starting emission time of the channels with the echoes overlapping in time in the first sub-detection of the subsequent predetermined round to be different comprises:
changing the pulse starting emission time of the lasers of the channels with the echoes overlapping in time when the echoes determined in the first sub-detection of a current detection corresponding to a current horizontal angle overlap each other in time, to cause the pulse starting emission time of the plurality of channels with the echoes overlapping in time in a next detection corresponding to a next horizontal angle to be different.

24. The detection method for the LiDAR of claim 15, further comprising:
controlling all channels to perform the first sub-detection in sequence based on a predetermined grouping time sequence, and then the second sub-detection by group.

25. The detection method for the LiDAR of claim 15, further comprising:
controlling channels of a predetermined group to continuously perform the first sub-detection and the second sub-detection in sequence based on the predetermined grouping time sequence.

26. The detection method for the LiDAR based on any of claims 15 to 25, further comprising:
determining a detecting result for the single detection based on an echo signal of at least one of the first sub-detection or the second sub-detection.

27. A LiDAR, comprising:
a light-emitter module, comprising a plurality of lasers;
a light-detector module, comprising a plurality of detectors respectively provided corresponding to the plurality of lasers to form a plurality of channels, wherein the plurality of detectors are configured to collect echoes after lasers of corresponding channels emit light to irradiate objects;
a data processor apparatus configured to perform detection by group based on a predetermined detection time sequence for all channels in a single detection round, wherein the detection is performed in parallel for each group of channels, and a single detection of each channel comprises a first sub-detection and a second sub-detection, and for a plurality of parallel detecting channels:
controlling lasers of the plurality of detecting channels to emit the light using a first light intensity in the first sub-detection, and determining first detection data through the detection by detectors corresponding to the plurality of detecting channels, wherein the first light intensity is configured to enable the corresponding detectors to receive echoes from high-reflectivity objects with reflectivity greater than a predetermined first reflectivity threshold; changing a light-emitting strategy of the lasers of the plurality of channels based on the first detection data in the second sub-detection, and determining second detection data through the detection by the corresponding detectors; and
determining a detecting result of the plurality of channels for a single detection based on at least one of the first detection data or the second detection data.

28. The LiDAR of claim 27, wherein the data processor apparatus is configured to determine whether a high-reflectivity object with the reflectivity greater than the first reflectivity threshold exists within a detection range of the plurality of channels based on the first detection data in the second sub-detection; control, for a channel with no high-reflectivity object within the detection range, a laser corresponding to the channel to emit the light using a second light intensity, wherein the second light intensity is greater than the first light intensity; and control, for a channel with the high-reflectivity object within the detection range, light intensity of a laser corresponding to the channel to be less than the first light intensity.

29. A LiDAR, comprising:
a plurality of lasers and a plurality of detectors to form a plurality of channels, wherein the lasers emit optical signals, the detectors receive echo signals reflected by obstacles, and a laser and a detector in a same channel at least partially overlap in a field of view;
a controller configured to control all channels to perform detection by group, comprising: controlling lasers of each group to emit light in parallel; a single detection of each channel comprising a first sub-detection and a second sub-detection; and correspondingly changing a light-emitting strategy of a laser of a parallel light-emitting channel in at least one of the second sub-detection or a first sub-detection of a subsequent round based on an echo signal in the first sub-detection.

30. A computer-readable storage medium with computer instructions stored thereon, wherein when the computer instructions are executed, steps of the method based on any of claims 1 to 14 are performed.

31. A computer-readable storage medium with computer instructions stored thereon, wherein when the computer instructions are executed, steps of the method based on any of claims 15 to 26 are performed.
